(19) Europäisches Patentamt
European Patent Office
Office européen des brevets

(11) **EP 4 585 451 A1**

(12) **EUROPEAN PATENT APPLICATION**

(43) Date of publication:
**16.07.2025 Bulletin 2025/29**

(21) Application number: **25151001.2**

(22) Date of filing: **09.01.2025**

(51) International Patent Classification (IPC):
**B60L 53/64** (2019.01)    **B60L 53/62** (2019.01)
**B60L 53/14** (2019.01)    **B60L 53/66** (2019.01)
**B60L 53/67** (2019.01)

(52) Cooperative Patent Classification (CPC):
**B60L 53/14; B60L 53/62; B60L 53/64; B60L 53/66;**
**B60L 53/67;** B60L 2240/64; B60L 2240/66;
B60L 2240/68; B60L 2250/12

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.01.2024 US 202418409297**

(71) Applicant: **Volvo Car Corporation**
**405 31 Göteborg (SE)**

(72) Inventors:
• **ERIKSSON, Alexander**
**40531 Göteborg (SE)**

• **ASTORSSON, Billy**
**40531 Göteborg (SE)**
• **BLEY, Jessica**
**40531 Göteborg (SE)**
• **DOGAN, Ebru**
**40531 Göteborg (SE)**
• **YENPURE, Rajashree**
**40531 Göteborg (SE)**
• **JOHANSSON, Lisa**
**40531 Göteborg (SE)**

(74) Representative: **Maiwald GmbH**
**Engineering**
**Elisenhof**
**Elisenstrasse 3**
**80335 München (DE)**

(54) **SYSTEM AND METHOD OF RECEIVING CHARGE FROM MULTIPLE ENTITIES**

(57)    A system is described. The system comprises one or more adapters (102); a first entity (104); a second entity (106); and a host smart charge receiver (108). The host smart charge receiver comprises a processor (110) storing instructions that, when executed, causes the processor to: determine presence of adapters coupled to a host vehicle (103); recognize at least one of the first entity and the second entity that are coupled to the host vehicle (105); establish a connection between the host vehicle, the first entity, and the second entity (107); analyze at least one of first charge and second charge received from the first entity and the second entity, respectively (109); select at least one of the first entity and the second entity for charging battery packs of the host vehicle based on at least one of a charging specification, a charging requirement, and a cost of charging (111); and provide an optimal charge to the battery packs (113).

FIG. 1

## Description

## FIELD OF THE INVENTION

The present disclosure relates generally to the field of charging electric vehicles. More specifically, the present disclosure relates to receiving charge from multiple entities.

## BACKGROUND

Suppose a vehicle is stranded due to weather or traffic for an extended period of time. The problem is that when one or more vehicles are losing power or have reached below a safe level, there is no way to combine resources to extend power to one vehicle. So, it would be great to receive power from multiple resources (e.g., other vehicles stuck in a similar situation) until the situation changes. For example, if one vehicle has lost power, the operator can request assistance from other vehicles nearby. However, when all the vehicles are below a discharge threshold (e.g., a preset charge level to ensure that enough charge remains for desired operation and not leaving the vehicle stranded), receiving a charge from one vehicle may not be possible or enough. Also, if the vehicles are stranded, it may be difficult for a vehicle with discharge capability to reach the vehicle in need. Thus, a system should be provided that can receive charge from multiple resources through a chain of resources.

Therefore, there is a long-felt need for a system and method of receiving charge from multiple entities.

## SUMMARY

The following paragraphs present a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

In one or more embodiments described herein, systems, devices, computer-implemented methods, methods, apparatus and/or computer program products are presented that facilitate receiving charge from multiple entities.

In an aspect, a system is described. The system comprises one or more adapters; a first entity; a second entity; and a host smart charge receiver. The host smart charge receiver comprises a processor storing instructions in non-transitory memory that, when executed, causes the processor to: determine presence of the one or more adapters electrically coupled to a host vehicle; recognize at least one of the first entity and the second entity that are electrically coupled to the host vehicle through the one or more adapters; establish a connection between the host vehicle, the first entity, and the second entity; analyze at least one of a first charge and a second charge received from the first entity and the second entity, respectively; select at least one of the first entity and the second entity for charging one or more first battery packs of the host vehicle based on at least one of a charging specification of the host vehicle, a charging requirement, and a cost of charging; and provide an optimal charge to the one or more first battery packs of the host vehicle.

In an aspect, a method is described. The method comprises: determining presence of one or more adapters electrically coupled to a host vehicle; recognizing at least one of a first entity and a second entity that are electrically coupled to the host vehicle through the one or more adapters; establishing a connection between the host vehicle, the first entity, and the second entity; analyzing at least one of a first charge and a second charge received from the first entity and the second entity, respectively; selecting at least one of the first entity and the second entity for charging one or more first battery packs of the host vehicle based on at least one of a charging specification of the host vehicle, a charging requirement, and a cost of charging; and providing an optimal charge to the one or more first battery packs of the host vehicle.

In an aspect, a non-transitory computer readable storage medium is described. The non-transitory computer readable storage medium comprising a sequence of instructions, which when executed by a processor causes: determining presence of one or more adapters electrically coupled to a host vehicle; recognizing at least one of a first entity and a second entity that are electrically coupled to the host vehicle through the one or more adapters; establishing a connection between the host vehicle, the first entity, and the second entity; analyzing at least one of a first charge and a second charge received from the first entity and the second entity, respectively; selecting at least one of the first entity and the second entity for charging one or more first battery packs of the host vehicle based on at least one of a charging specification of the host vehicle, a charging requirement, and a cost of charging; and providing an optimal charge to the one or more first battery packs of the host vehicle.

The methods and systems disclosed herein may be implemented in any means for achieving various aspects and may be executed in a form of a non-transitory machine-readable medium embodying a set of instructions that, when executed by a machine, causes the machine to perform any of the operations disclosed herein. Other features will be apparent from the accompanying drawings and from the detailed description that follows.

## BRIEF DESCRIPTION OF THE FIGURES

These and other aspects of the present disclosure will now be described in more detail, with reference to the appended drawings showing exemplary embodiments, in which:

FIG. 1 illustrates a system, according to one or more embodiments.

FIG. 2 illustrates a method, according to one or more embodiments.

FIG. 3 illustrates a non-transitory computer readable storage medium, according to one or more embodiments.

FIG. 4 illustrates a block diagram of a system, according to one or more embodiments.

FIG. 5 illustrates a battery pack of the host vehicle comprising an individual battery, according to one or more embodiments.

FIG. 6 illustrates a battery pack of the host vehicle comprising a plurality of batteries, according to one or more embodiments.

FIG. 7 schematically shows a battery pack comprising a battery and a battery management system, according to one or more embodiments.

FIG. 8 illustrates a message sent by a host smart charge receiver to a first entity, according to one or more embodiments.

FIG. 9 illustrates a message sent by a host smart charge receiver to a first entity, according to one or more embodiments.

FIG. 10 depicts a view that illustrates an embodiment of the main adapter having more sockets in relation to a power extension cord.

FIG. 11 illustrates a power transfer between a host vehicle, a first entity, and a second entity, according to one or more embodiments.

FIG. 12 illustrates a power transfer between a host vehicle, a first entity, and a second entity, according to one or more embodiments.

FIG. 13 illustrates a power transfer between a host vehicle, a first entity, and a second entity, according to one or more embodiments.

FIG. 14 illustrates a system, according to one or more embodiments.

FIG. 15 illustrates a method, according to one or more embodiments.

FIG. 16 illustrates a non-transitory computer readable medium, according to one or more embodiments.

FIG. 17 illustrates a message sent by a host smart charge receiver to a first entity, according to one or more embodiments.

FIG. 18 illustrates a message sent by a host smart charge receiver to a first entity, according to one or more embodiments.

FIG. 19 illustrates the first entity functioning as an extension charger, according to one or more embodiments.

FIG. 20 illustrates the first entity functioning as an extension charger, according to one or more embodiments.

FIG. 21 illustrates the first entity functioning as an extension charger, according to one or more embodiments.

FIG. 22A shows a block diagram of the cyber security module in view of the system and server.

FIG. 22B shows an embodiment of the cyber security module.

FIG. 22C shows another embodiment of the cyber security module.

FIG. 23A shows a structure of the neural network / machine learning model with a feedback loop.

FIG. 23B shows a structure of the neural network / machine learning model with reinforcement learning.

Other features of the present embodiments will be apparent from the accompanying drawings and from the detailed description that follows.

## DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although the detailed description herein contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs.

Unless defined otherwise, all technical and scientific terms used herein have the same meaning as commonly understood by one with ordinary skill in the art.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

As used herein, the terms "example" and/or "exemplary" mean serving as an example, instance, or illustration. For the avoidance of doubt, such examples do not limit the herein described subject matter. In addition, any aspect or design described herein as an "example" and/or "exemplary" is not necessarily preferred or advantageous over other aspects or designs, nor does it preclude equivalent exemplary structures and techniques known to those of ordinary skill in the art.

As used herein, the terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left," "right," "front," "back," "top," "bottom," "over," "under" and the like in the description and in the claims, if any, are for descriptive purposes and not necessarily for describing permanent relative positions. The terms so used are interchangeable under appropriate circumstances such that the embodiments of the apparatus, methods, and/or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more". Where only one item is intended, the term "one" or similar language is used. Also, the terms "has," "have," "having," or the like are open-ended terms. Further, the phrase "based on" means "based, at least in part, on" unless explicitly stated otherwise.

As used herein, the terms "system," "device," "unit," and/or "module" refer to a different component, component portion, or component of the various levels of the order. However, other expressions that achieve the same purpose may replace the terms.

As used herein, the terms "couple," "coupled," "couples," "coupling," and the like refer to connecting two or more elements mechanically, electrically, and/or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably," "removable," and the like, near the word "coupled" and the like does not mean that the coupling, etc., in question is or is not removable.

As used herein, the term "or" means an inclusive "or" rather than an exclusive "or." That is, unless specified otherwise, or clear from context. "X employs A or B" means any of the natural inclusive permutations. That is, if X employs A; X employs B; or X employs both A and B, then "X employs A or B" is satisfied under any of the foregoing instances.

As used herein, two or more elements or modules are "integral" or "integrated" if they operate functionally together. Two or more elements are "non-integral" if each element can operate functionally independently.

As used herein, the term "real-time" refers to operations conducted as soon as practically possible upon occurrence of a triggering event. A triggering event can include receipt of data necessary to execute a task or to otherwise process information. Because of delays inherent in transmission and/or in computing speeds, the term "real-time" encompasses operations that occur in "near" real-time or somewhat delayed from a triggering event. In a number of embodiments, "real-time" can mean real-time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Digital electronic circuitry, or in computer software, firmware, or hardware, including the structures disclosed in this specification and their structural equivalents, or in combinations of one or more of them may realize the implementations and all of the functional operations described in this specification. Implementations may be as one or more computer program products, i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data including, by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and/or methods is not limiting to the implementations. Thus, any software and any hardware can implement the systems and/or methods based on the description herein without reference to specific software code.

A computer program (also known as a program, software, software application, script, or code) is written in any appropriate form of programming language, including compiled or interpreted languages. Any appropriate form of computer, including a standalone program or a module, component, subroutine, or other unit suitable for use in a computing environment may deploy the computer program. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of a digital computer. A processor will receive instructions and data from a read-only memory or a random-access memory or both. Elements of a computer can include a processor for performing instructions and one or more memory devices for storing instructions and data. A computer will also include, or is operatively coupled to, receiving data, transferring data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc., may be embedded in a computer. Computer-readable media suitable for storing computer program instructions and data include all forms of non-volatile memory, media and memory devices including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network, may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship to each other.

Embodiments may comprise or utilize a special purpose or general purpose computer including computer hardware. Embodiments within the scope of the present invention may also include physical and other computer-readable media for carrying or storing computer-executable instructions and/or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and/or Digital Signal Processor (DSP) circuit) may embody the various electrical structures and methods.

In addition, a non-transitory machine-readable medium and/or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

As used herein, the term "network" refers to one or more data links that enable the transport of electronic data between computer systems and/or modules and/or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and/or modules and/or other electronic devices. Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and/or to less volatile computer-readable physical storage media at a computer system. Thus, computer system components that also (or even primarily) utilize transmission media may include computer-readable physical storage media.

Computer-executable instructions comprise, for example, instructions and data which cause a general purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and/or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and/or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and/or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

The following terms and phrases, unless otherwise indicated, shall have the following meanings.

As used herein, the term "sensor module" refers to a unit that contains components or circuits in addition to the sensors. The additional components or circuits make the sensor easy to use. The sensor module may be an integrated circuit comprising additional components and sensors adaptable for an application. The sensor module may comprise one or more sensors that operate functionally together. For example, the one or more cameras and the one or more sensors within the sensor module are integrated with one another to determine charge consumption factors. The sensors within the sensor module operate in an integrated manner to monitor the environmental conditions, external surroundings, etc., to estimate and monitor the charge consumption.

As used herein, the term "electric vehicle (EV)" refers to an automobile, as defined in 49 CFR 523.3, intended for highway use, powered by an electric motor that draws current from an on-vehicle energy storage device, such as a battery, which is rechargeable from an off vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

As used herein, the term "plug-in electric vehicle (PEV)" refers to an Electric Vehicle that recharges the on-vehicle primary battery by connecting to the power grid.

As used herein, the term "plug-in vehicle (PV)" refers to an electric vehicle rechargeable through wireless charging from an electric vehicle supply equipment (EVSE) without using a physical plug or a physical socket.

As used herein, the term "heavy duty vehicle (HD Vehicle)" refers to any four- or more wheeled vehicle as defined in 49 CFR 523.6 or 49 CFR 37.3 (bus).

As used herein, the term "light duty plug-in electric vehicle" refers to a three or four-wheeled vehicle propelled by an electric motor drawing current from a rechargeable storage battery or other energy devices for use primarily on public streets, roads and highways and rated at less than 4, 545 kg gross vehicle weight.

As used herein, the term "state-of-health (SoH)" refers to a figure of merit of the condition of a battery pack, compared to its ideal conditions. The state-of-health (SoH) of a battery pack describes the difference between a battery pack being studied and a fresh battery pack, and considers cell aging. The SoH is defined as the ratio of the maximum battery charge to its rated capacity. It may be expressed in percentage form. The battery pack may comprise one or more batteries.

As used herein, the term "charging station" refers to a device that includes at least one docking terminal with a charger for charging a battery pack. The battery pack may comprise one or more batteries. The term "charging station," as used further, refers to an apparatus that can function as a source of power for charging the battery pack of an electric vehicle including facilitating data communications between the electric vehicle and the charging station. The communications may be established through a wired connection or a wireless connection. The charging station is also capable of charging the electric vehicle either through a wired connection or a wireless connection.

As used herein, the term "host vehicle" refers to the vehicle that is requesting charge from other entities. The host vehicle may be one of an autonomous vehicle, a non-autonomous vehicle, and a semi-autonomous vehicle.

As used herein, the term "first entity" refers to a primary charging source or primary charging resource adapted for charging the electric vehicle. The first entity may be the entity having abundant charge that can transfer charge to another vehicle. The first entity may be the entity that is closest to the host vehicle. The first entity may be the entity that provides charge at a low cost or free of cost.

As used herein, the term "second entity" refers to a secondary charging source or secondary charging resource adapted for charging the electric vehicle. The second entity may be the entity having abundant charge that can transfer charge to another vehicle. The second entity may be the entity that is second closest to the host vehicle.

As used herein, the term "adapter" refers to a provision for coupling the host vehicle with adjacent entities. The adapter may comprise provisions for plugging in the charging cables. The adapter comprises provisions for coupling multiple inputs and for providing a single output. The adapter may be extended to have more sockets/connection mechanisms by coupling more subsequent adapters. The adapter is a device for connecting an apparatus (host vehicle) to a power supply (e.g., first entity, second entity, etc.).

As used herein, the term "battery pack" refers to a set of any number of identical batteries or individual cells of a battery. The "battery pack" may also refer to a set of non-identical batteries. The batteries in the battery pack may be configured in a series, parallel or a mixture of both to deliver the desired voltage, capacity, and/or power density.

As used herein, the term "control unit" or "control module" or "electronic control unit" refers to a functional unit in a computer system that controls one or more units of the peripheral equipment. For example, it may be a component of a charging system that provides instructions or signals to the charger unit to charge the battery pack as per the charging requirement.

As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

As used herein, the term "vehicle computer system" refers to an embedded system in automotive electronics that controls one or more of the electrical systems or subsystems in a vehicle. The computer executes a large number of different software functions in the powertrain, chassis, driver assistance, and infotainment domains, etc., that are executed on separate control units. The vehicle computer system may be communicatively coupled with an external device of a user. The vehicle computer system may also be communicatively coupled with the charging station.

As used herein, the term "electronic control unit" (ECU), also known as an "electronic control module" (ECM), is a system that controls one or more subsystems. An ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be embedded in automotive electronics. In another example, the electronic control unit is wirelessly coupled with the automotive electronics.

As used herein, the term "infotainment system" or "infotainment unit" or "in-vehicle infotainment system" (IVI) as used herein refers to a combination of systems which are used to deliver entertainment and information. In an example, the information may be delivered to the driver and the passengers of a vehicle through audio/video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

As used herein, the term "charging sequence" refers to a charging pattern defined by the charging system or the charging station based on the battery parameters (e.g., state-of-charge, state-of health) and charging time. The charging sequence may comprise a charging level for a predefined charging time segment. The charging sequence may also comprise a charging level for a predefined portion (e.g., healthy cells, degraded cells) of the battery pack. The charging level may comprise regular charging, fast charging, and trickle charging.

As used herein, the term "maximum charging" or "optimally charging" refers to a maximum rate at which the charging is provided to the battery pack during the charging time without damaging the battery pack.

As used herein, the term "subsequent adapter" refers to an adapter that is subsequent or additional to the main adapter. The subsequent adapters are considered for charging the host vehicle when the host vehicle requests charge from multiple entities. The subsequent adapter may be requested and/or paired when the main adapter does not have more provisions to accommodate subsequent entities for charging.

As used herein, the term "host smart charge receiver" refers to a component that receives charge and provides charge optimally to the host vehicle. The host smart charge receiver comprises artificial intelligence. The host smart charge receiver analyzes parameters related to a battery pack of the vehicle and determines the charging requirement of the vehicle. The host smart charge receiver is also adapted to analyze the received charge from multiple entities and distribute the charge to the host vehicle based on at least one of a charging specification, a charging requirement, and a cost of charging.

As used herein, the term "environmental condition" refers to a state or quality of the environment. The environmental condition refers to the various tangible or concrete hazards or difficulties that are in the vicinity of the host vehicle, and describes surroundings or conditions experienced by the host vehicle as it moves.

As used herein, the term "traffic condition" refers to a condition in transportation that is characterized by slower speeds, longer trip times, and increased vehicular queueing. Traffic conditions may comprise traffic congestion, traffic jams, etc. Traffic conditions may further comprise information regarding speed of the vehicles, direction of the vehicles, and the number of vehicles facing the traffic. In an embodiment, the traffic condition comprises real-time traffic data. In another embodiment, the traffic condition may be static or dynamic. In another embodiment, the traffic condition represents at least one of schematic, numerical or pictorial data representing the present state of the vehicles along the route for a predefined interval. In yet another embodiment, the traffic condition refers to the mean velocity of vehicles at a fixed point on the road within a time slot.

As used herein, the term "first charge" refers to charge received from the first entity.

As used herein, the term "second charge" refers to charge received from the second entity.

As used herein, the term "image analysis" refers to processing one or more images into fundamental components to extract meaningful information. Image analysis is a technique used to obtain information from digital images using processing tools that segment pixels in a digital image based on color or density. The segmented image is then used to quantitate an area (defined by pixels) of specific features.

As used herein, the term "vehicle to vehicle (V2V) communication" refers to the technology that allows vehicles to broadcast and receive messages. The messages may be omnidirectional messages, creating a 360-degree "awareness" of other vehicles in proximity. Vehicles may be equipped with appropriate software (or safety applications) that can use the messages from surrounding vehicles to determine potential crash threats as they develop.

As used herein, the term "charging time" refers to a time allotted for charging. The user may provide the charging time. The charging time may also be determined by the entities or the host vehicle. The charging time may be split into charging time segments. Each charging time segment may correspond to a different charging level. Each charging time segment may correspond to charging a different portion of the battery pack.

As used herein, the term "state-of-charge (SoC)" refers to the level of charge of an electric battery pack relative to its capacity. The units of SoC are percentage points (0% = empty; 100% = full). An alternative form of the same measure is the depth of discharge (DoD), the inverse of SoC (100% = empty; 0% = full). SoC is normally used when discussing the current state of a battery in use, while DoD is most often seen when discussing the lifetime of the battery after repeated use.

As used herein, the term "threshold charge level" refers to a minimum charge level of the electric battery pack (having the one or more batteries) of the vehicle necessary to operate a predefined function of the vehicle. The threshold charge level may be preset by the processor of the control module. The threshold charge level can be altered by the processor.

As used herein, the term "bidirectional communication" refers to an exchange of data between two components. In an example, the first component can be a vehicle and the second component can be an infrastructure that is enabled by a system of hardware, software, and firmware. This communication is typically wireless. In another example, the first component can be a charging system and the second component can be a charging station.

As used herein, the term "machine learning" refers to algorithms that give a computer the ability to learn without being explicitly programmed, including algorithms that learn from and make predictions about data. Machine learning algorithms include, but are not limited to, decision tree learning, artificial neural networks (ANN) (also referred to herein as a "neural net"), deep learning neural network, support vector machines, rules-based machine learning, random forest, etc. For the purposes of clarity, algorithms such as linear regression or logistic regression can also be used as part of a machine learning process. However, it is understood that using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. Statistical modelling relies on finding relationships between variables (e.g., mathematical equations) to predict an outcome. The ANN may be featured with a feedback loop to adjust the system output dynamically as it learns from the new data as it becomes available. In machine learning, backpropagation and feedback loops are used to train the AI/ML model improving the model's accuracy and performance over time.

As used herein, the term "communication" refers to the transmission of information and/or data from one point to another. Communication may be by means of electromagnetic waves. It is also a flow of information from one point, known as the source, to another, the receiver. Communication comprises one of the following: transmitting data, instructions, and information or a combination of data, instructions, and information. Communication happens between any two communication systems or communicating units. The term "in communication with" may refer to any coupling, connection, or interaction using electrical signals to exchange information or data, using any system, hardware, software, protocol, or format, regardless of whether the exchange occurs wirelessly or over a wired connection. The term "communication" includes systems that combine other more specific types of communication, such as V2I (Vehicle-to-Infrastructure), V2I (Vehicle-to-Infrastructure), V2N (Vehicle-to-Network), V2V (Vehicle-to-Vehicle), V2P (Vehicle-to-Pedestrian), V2D (Vehicle-to-Device) and V2G (Vehicle-to-Grid) and Vehicle-to-Everything (V2X) communication. V2X communication is the transmission of information from a vehicle to any entity that may affect the vehicle, and vice versa. The main motivations for developing V2X are occupant safety, road safety, traffic efficiency and energy efficiency. Depending on the underlying technology employed, there are two types of V2X communication technologies: cellular networks and other technologies that support direct device-to-device communication (such as Dedicated Short-Range Communication (DSRC), Port Community System (PCS), Bluetooth', Wi-Fi®, etc.). Further, the emergency communication apparatus is configured on a computer with the communication function and is connected for bidirectional communication with the on-vehicle emergency report apparatus by a communication line through a radio station and a communication network such as a public telephone network or by satellite communication through a communication satellite. The emergency communication apparatus is adapted to communicate, through the communication network, with communication terminals including a road management office, a police station, a fire department, and a hospital. The emergency communication apparatus can also be connected online with the communication terminals of the persons or vehicles concerned, associated with the occupant or vehicle, and the driver or vehicle receiving the service of the emergency-reporting vehicle.

As used herein, the term "message structure" refers to a structure of a communication message when a query and fetch operation occurs. It comprises a payload and a header, where the payload includes the quantitative value of the information that is shared, and the header includes reference to the information being shared. The message structure acts as a superstructure to accommodate any sub protocol structure such as AMQP, MQTT, Zigbee, etc.

As used herein, the term "artificial intelligence unit" refers to any system that perceives its environment and takes actions that maximize its chance of achieving its goals. An artificial intelligence unit utilizes a plurality of machine learning algorithms that allow systems to automatically improve through experience.

As used herein, the term "communication system" or "communication module" as used herein refers to a system which enables the information exchange between two points. The process of transmission and reception of information is called communication. The major elements of communication include but are not limited to a transmitter of information, channel or medium of communication and a receiver of information.

As used herein, the term "artificial intelligence (AI)" refers to the intelligence demonstrated by machines, as opposed to the natural intelligence displayed by humans. AI research has been defined as any system that perceives its environment and takes actions that maximize its chance of achieving its goals. The term "artificial intelligence" is now described in terms of rationality and acting rationally, which does not limit how intelligence can be articulated.

As used herein, the term "sensor module" refers to actuators and basic control logic that acts as either a regulating device, a state-oriented device or a combination that is operated as a single device.

As used herein, the term "charging specification" refers to a detailed description of the actual charging capability of the vehicle. The charging specification refers to information of essential details of charging the vehicle. The charging specification may comprise actual charging modes, actual charging durations, actual charging sequences, vehicle operating modes, operating types, charging capabilities, etc.

As used herein, the term "charging requirement" refers to charging required to complete an intended task.

As used herein, the term "consolidate" refers to the process of joining or combining together the charges received by the first entity and the second entity.

As used herein, the term "plugging" refers to insertion of the charging cable into the host vehicle or the adapter. The charging cable may comprise a charger plug that fits exactly into the charging port. The charger plug may comprise metal pins capable of supplying power to the host vehicle for charging the battery packs.

As used herein, the term "unplugging" refers to the removal of the charging cable away from the host vehicle or the adapter.

As used herein, the term "predefined charge" refers to a predefined amount of electric power to be supplied to the host vehicle for charging the host vehicle.

As used herein, the term "predefined charge duration" refers to a predefined time for which the predefined amount of electric power is supplied to the vehicle for charging the vehicle.

As used herein "itinerary" refers to a travel plan of a user/vehicle. The itinerary comprises scheduled events, their locations, duration, time, date, etc. In an embodiment, "itinerary" refers to a trip to work, trips to a doctor, trips to a grocery store, and the like. The itineraries may also include other infrequently used itineraries, such as vacation trips, extended travel, short term trips, quick trips, and the like. The itineraries may be divided into a predicted departure time, departure point, a start time, a destination, and an end time. The itinerary may also include intermediate waypoints that further define the route. The itinerary may include, without limitation, departure point, departure time, destination, intended route, and optional intermediate waypoints.

As used herein, the term "content" refers to an object, a data, a visual representation, information, etc. The content may comprise meaningful information. The content may also comprise random information that is meaningless.

As used herein, the term "vehicle identification number" refers to an identifying code for a specific automobile. The vehicle identification number (VIN) is a unique code, including a serial number, used to identify individual motor vehicles.

As used herein, the term "vehicle type" refers to a type to which the vehicle is categorized. The vehicle type comprises one of an autonomous vehicle, a non-autonomous vehicle, and a semi-autonomous vehicle.

As used herein, the term "subsequent entity" refers to an entity that is subsequent or next to the closest entities. The subsequent entities are considered for charging the host vehicle when the closest entities are stranded. The subsequent entity is the next closest entity. The subsequent entity may be requested and/or paired when the first entity and the second entity are not available or out of charge.

As used herein, the term "Cryptographic protocol" is also known as security protocol or encryption protocol. It is an abstract or concrete protocol that performs a security-related function and applies cryptographic methods often as sequences of cryptographic primitives. A protocol describes usage of the algorithms. A sufficiently detailed protocol includes details about data structures and representations to implement multiple, interoperable versions of a program. Cryptographic protocols are widely used for secure application-level data transport. A cryptographic protocol usually incorporates at least some of these aspects: key agreement or establishment, entity authentication, symmetric encryption, and message authentication, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

Secure application-level data transport widely uses cryptographic protocols. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation.

Networking switches use cryptographic protocols, like Secure Socket Layer (SSL) and Transport Layer Security (TLS), the successor to SSL, to secure data communications over a wireless network.

As used herein, the term "Unauthorized access" is when someone gains access to a website, program, server, service, or other system using someone else's account or other methods. For example, if someone kept guessing a password or username for an account that was not theirs until they gained access, it is considered unauthorized access.

As used herein "Machine learning" refers to algorithms that give a computer the ability to learn without being explicitly programmed, including algorithms that learn from and make predictions about data. Machine learning techniques include, but are not limited to, and support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, algorithms such as linear regression or logistic regression can also be used as part of a machine learning process. However, it is understood that using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the AI/ML model improving the model's accuracy and performance over time.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "Sensor" is a device that detects and measures physical properties from the surrounding environment and converts this information into electrical or digital signals that can be interpreted by either a human or a machine for further processing. Sensors play a crucial role in collecting data for various applications across industries. Sensors may be made of electronic, mechanical, chemical, or other engineering components. Most sensors are electronic (the data is converted into electronic data), but some sensors are simpler, such as a glass thermometer, which presents visual data. Examples include sensors to measure temperature, pressure, humidity, proximity, light, acceleration, orientation, etc. In an embodiment, sensors may be removably or fixedly installed within the vehicle and may be disposed in various arrangements to provide information to the autonomous operation features. The sensors may include one or more of a GPS unit, a radar unit, a LIDAR unit, an ultrasonic sensor, an infrared sensor, an inductance sensor, a camera, an accelerometer, a tachometer, a tension sensor, or a speedometer. Some of the sensors (e.g., radar, LIDAR, or camera units) may actively or passively scan the interior of the vehicle for the presence of occupants (e.g., child, adult, kids, passenger, driver, etc.) to determine occupant weight and vehicle weight.

The term "vehicle" as used herein refers to a thing used for transporting people or goods. Automobiles, cars, trucks, buses, etc., are examples of vehicles.

The term "electronic control unit" (ECU), also known as an "electronic control module" (ECM), is usually a module that controls one or more subsystems. Herein, an ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with the automotive electronics.

The terms "non-transitory computer-readable medium" and "computer-readable medium" include a single medium or multiple media such as a centralized or distributed database, and/or associated caches and servers that store one or more sets of instructions. Further, the terms "non-transitory computer-readable medium" and "computer-readable medium" include any tangible medium that is capable of storing, encoding, or carrying a set of instructions for execution by a processor that, for example, when executed, causes a system to perform any one or more of the methods or operations disclosed herein. As used herein, the term "computer readable medium" is expressly defined to include any type of computer readable storage device and/or storage disk and to exclude propagating signals.

The term "Vehicle Data bus" as used herein represents the interface to the vehicle data bus (e.g., CAN, LIN, Ethernet/IP, FlexRay, and MOST) that may enable communication between the Vehicle on-board equipment (OBE) and other vehicle systems to support connected vehicle applications.

The term, "handshaking" refers to an exchange of predetermined signals between agents connected by a communications channel to assure each that it is connected to the other (and not to an imposter). This may also include the use of passwords and codes by an operator. Handshaking signals are transmitted back and forth over a communications network to establish a valid connection between two stations. A hardware handshake uses dedicated wires such as the request-to-send (RTS) and clear-to-send (CTS) lines in an RS-232 serial transmission. A software handshake sends codes such as "synchronize" (SYN) and "acknowledge" (ACK) in a TCP/IP transmission.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "autonomous mode" as used herein refers to a vehicle operating mode which is independent and unsupervised.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "communication protocol" as used herein refers to standardized communication between any two systems. An example of a communication protocol is a DSRC protocol. The DSRC protocol uses a specific frequency band (e.g., 5.9 GHz) and specific message formats (such as the Basic Safety Message, Signal Phase and Timing, and Roadside Alert) to enable communications between vehicles and infrastructure components, such as traffic signals and roadside sensors. DSRC is a standardized protocol, and its specifications are maintained by various organizations, including the IEEE and SAE International.

The term "alert" or "alert signal" refers to a communication to attract attention. An alert may include visual, tactile, audible alert, and a combination of these alerts to warn drivers or occupants. These alerts allow receivers, such as drivers or occupants, the ability to react and respond quickly.

As used herein, the term "video analytics" refers to a practical solution for reviewing hours of video (e.g., surveillance video) to identify incidents that are pertinent to what you are looking for. Video analytics is adapted to automatically generate descriptions of what is actually happening in the video (so-called metadata), which can be used to list occupants, seat belt and other objects detected in the video stream (e.g., fastened seat belt, presence of an occupant, postures, gestures, etc.), as well as their appearance and movements.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is '02', and so on. For example, a message like "HELLO" will be encrypted as "0805121215," and this value will be transmitted over the network to the destination or recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damaging data, stealing data, or disrupting digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. An alarm indication signal may be reported downstream from a detecting device to prevent adverse situations or cascading effects.

The term "in communication with" as used herein, refers to any coupling, connection, or interaction using electrical signals to exchange information or data, using any system, hardware, software, protocol, or format, regardless of whether the exchange occurs wirelessly or over a wired connection.

As used herein, the term "cryptographic protocol" is also known as security protocol or encryption protocol. It is an abstract or concrete protocol that performs a security-related function and applies cryptographic methods often as sequences of cryptographic primitives. A protocol describes how the algorithms should be used. A sufficiently detailed protocol includes details about data structures and representations, at which point it can be used to implement multiple, interoperable versions of a program. Cryptographic protocols are widely used for secure application-level data transport. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

As used herein, the term "network" may include the Internet, a local area network, a wide area network, or combinations thereof. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

The term "autonomous vehicle" also referred to as self-driving vehicle, driverless vehicle, robotic vehicle as used herein refers to a vehicle incorporating vehicular automation, that is, a ground vehicle that can sense its environment and move safely with little or no human input. Self-driving vehicles combine a variety of sensors to perceive their surroundings, such as thermographic cameras, Radio Detection and Ranging (radar), Light Detection and Ranging (lidar), Sound Navigation and Ranging (sonar), Global Positioning System (GPS), odometry and inertial measurement unit. Control systems, designed for the purpose, interpret sensor information to identify appropriate navigation paths, as well as obstacles and relevant signage.

As used herein, the term "semi-autonomous vehicle" refers to vehicles that can operate for extended periods with little human input. A semi-autonomous vehicle cannot drive itself at all times, but does automate some driving functions under ideal conditions like highway driving. A semi-autonomous vehicle may use "autopilot" features. In one embodiment, semi-autonomous vehicles may be able to keep in lane, and they may also be able to park themselves, but they are not self-driving. The semi-autonomous vehicles act independently to some degree.

As used herein the term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networking. A channel is used for information transfer of, for example a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

As used herein, the term "connection" refers to an electrical connection established for transfer of power between entities. The connection may be a daisy-chain connection. The connection may be a wired connection. The connection may be a wireless connection.

As used herein, the term "daisy-chain connection" refers to a connection of a series of interconnected entities. Daisy chain is a wiring scheme in which multiple devices are wired together in sequence or in a ring, similar to a garland of daisy flowers. Daisy chains may be used for power transfer between entities.

As used herein, the term "extension charger" refers to an entity that may function as an intermediary entity. The extension charger may be adapted to couple multiple entities to the host vehicle. The extension charger through the host smart charge receiver may skip/bypass charge from one or more entities and receive charge from the selected entities.

As used herein, the term "level 1 charging" refers to a charge that uses 120-207 Volts. Every electric vehicle or plug-in hybrid can be charged on level 1 charging by plugging the charging equipment into a regular wall outlet. Level 1 charging may be the slowest way to charge an EV. Level 1 charging, generally, adds between 3 and 5 miles of range per hour.

As used herein, the term "level 2 charging" refers to a charge that uses 208- 240 Volts. Level 2 charging is the most commonly used for daily EV charging. Level 2 charging equipment can be installed at home, at the workplace, as well as in public locations like shopping plazas, train stations and other destinations. Level 2 charging can replenish between 12 and 80 miles of range per hour, depending on the power output of the Level 2 charger, and the vehicle's maximum charge rate.

As used herein, the term "level 3 charging" refers to a charge that uses 400 - 900 Volts DC. Level 3 charging is the fastest type of charging available and can recharge the EV at a rate of 3 to 20 miles of range per minute. Unlike Level 1 charging and Level 2 charging that uses alternating current (AC), Level 3 charging uses direct current (DC).

As used herein, the term "protocol" refers to a procedure required to initiate and maintain communication; a formal set of conventions governing the format and relative timing of message exchange between two communications terminals; a set of conventions that govern the interaction of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications within a computer system or network; a formal set of conventions governing the format and relative timing of message exchange in a computer system; a set of semantic and syntactic rules that determine the behavior of functional units in achieving meaningful communication; a set of semantic and syntactic rules for exchanging information.

As used herein, the term "component" broadly construes hardware, firmware, and/or a combination of hardware, firmware, and software.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. For example, the computer readable storage medium can be, but is not limited to, an electronic storage device, a magnetic storage device, an optical storage device, an electromagnetic storage device, a superconducting storage device, and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, does not construe transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein are downloadable to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA), and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. Each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter described herein is in the general context of computer-executable instructions of a computer program product that runs on a computer and/or computers, those skilled in the art will recognize that the one or more embodiments herein also can be implemented in combination with one or more other program modules. Program modules include routines, programs, components, data structures, and/or the like that perform particular tasks and/or implement particular abstract data types. Moreover, other computer system configurations, including single-processor and/or multiprocessor computer systems, mini-computing devices, mainframe computers, as well as computers, hand-held computing devices (e.g., PDA, phone), microprocessor-based or programmable consumer and/or industrial electronics and/or the like can practice the herein described computer-implemented methods. Distributed computing environments, in which remote processing devices linked through a communications network perform tasks, can also practice the illustrated aspects. However, stand-alone computers can practice one or more, if not all, aspects of the one or more embodiments described herein. In a distributed computing environment, program modules can be located in both local and remote memory storage devices.

As used in this application, the terms "component," "system," "platform," "interface," and/or the like, can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

As it is employed in the subject specification, the term "processor" can refer to any computing processing unit and/or device comprising, but not limited to, single-core processors; single-processors with software multi-thread execution capability; multi-core processors; multi-core processors with software multi-thread execution capability; multi-core processors with hardware multi-thread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular based transistors, switches and/or gates, in order to optimize space usage and/or to enhance performance of related equipment. A combination of computing processing units can implement a processor.

Herein, terms such as "store," "storage," "data store," data storage," "database," and any other information storage component relevant to operation and functionality of a component refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and/or nonvolatile random access memory (RAM) (e.g., ferroelectric RAM (FeRAM). Volatile memory can include RAM, which can function as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synch link DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein include, without being limited to including, these and/or any other suitable types of memory.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and/or technical improvement over technologies found in the marketplace, and/or to enable others of ordinary skill in the art to understand the embodiments described herein.

Technical problem 1: Suppose the vehicle is stranded due to weather or traffic for an extended period of time. The problem is that when one or more cars are losing power or have reached below a safe level, there is no way to combine resources to extend power to one vehicle. So, it would be nice to be able to receive power from multiple resources (e.g., other cars stuck in similar situations) until the situation changes. For example, if one car has lost power, the operator can request assistance for other cars nearby. However, when all the cars are below a discharge threshold (e.g., a charge level preset to ensure that enough charge remains for the desired operation and not leaving the car stranded), receiving a charge from one vehicle may not be possible or enough. Also, if the cars are stranded, it may be difficult for a car with discharge capability to reach the car in need. Thus, a system should be provided that can receive charge from multiple resources and through a chain of resources.

Technical Solution 1: In an aspect, a system is provided that can receive a charge from multiple resources. For example, an emergency adapter is provided to receive multiple inputs. The adapter can be multiplied or extended by adding additional adapters (e.g., suppose each car is provided an adapter with two inputs, and by adding an extra adapter from another car, the car can be connected to three resources at one time, i.e., one adapter + additional adapter = two adapters and adding one more could make it three adapters or more). The adapter can be more than two, but a preferred adapter would have one output and two inputs. This would allow a car to be connected to a charger and another source when using an adapter. A smart charging system provided in the car can manage and control the reception of charge. In an aspect, the first resource (e.g., the charging station) can be used for fast charging, while the second resource (e.g., another car) can be used for slow charging. The smart system can select the battery cells based on the type of charging. The system can monitor all health issues while receiving charge from two or more resources. The system can switch between resources based on price (e.g., cost associated with charging where the charging station may be cheaper than the car charging), or the type of charge (e.g., fast or slow).

Using the adapter, the system can also allow a vehicle (e.g., car) to either by-pass or add to charge received from another car. For example, if the car requiring a charge is too far when there is another car closer to it, using the adapter, the stranded car can receive a charge from the distance car that plugged into the closer car, wherein the closer car acts as an extension cord or adds charge in addition to the charge received from the distance car. In an aspect, a daisy chain can be established where each member of the daisy chain can contribute.

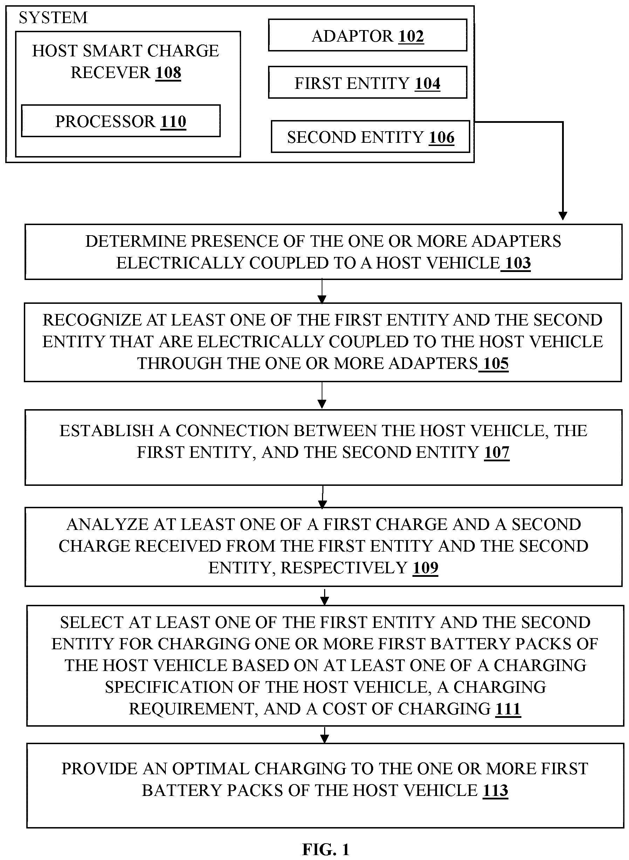

As an example, **FIG. 1** illustrates a system, according to one or more embodiments. The system comprises one or more adapters 102; a first entity 104; a second entity 106; and a host smart charge receiver 108. The host smart charge receiver 108 comprises a processor 110 storing instructions in non-transitory memory that, when executed, causes the processor 110 to: determine presence of the one or more adapters 102 electrically coupled to a host vehicle (at step 103); recognize at least one of the first entity and the second entity that is electrically coupled to the host vehicle through the one or more adapters (at step 105); establish a connection between the host vehicle, the first entity, and the second entity (at step 107); analyze at least one of a first charge and a second charge received from the first entity and the second entity, respectively (at step 109); select at least one of the first entity and the second entity for charging one or more first battery packs of the host vehicle based on at least one of a charging specification of the host vehicle, a charging requirement, and a cost of charging (at step 111); and provide an optimal charge to the one or more first battery packs of the host vehicle (at step 113). The first entity may be one of a vehicle, a charging station, and a solar panel station. The second entity may be one of a vehicle, a charging station, and a solar panel station. In one embodiment, the first entity and the second entity are similar entities. In another embodiment, the first entity and the second entity are dissimilar entities. The host smart charge receiver 108 may be associated with a host vehicle. The host vehicle may be one of an autonomous vehicle, a semi-autonomous vehicle, and a non-autonomous vehicle.

The host vehicle may be adjacent to the first entity and the second entity. In one embodiment, the first entity is closer to the host vehicle than the second entity, in which the first entity may function as an extension charger.

The one or more adapters 102 may be extended by electrically coupling one or more subsequent adapters to receive input power from subsequent entities. The one or more adapters are operable to receive input power simultaneously from the first entity and the second entity. The one or more adapters then provide the input power received from the first entity and the second entity to the host smart charge receiver. The one or more adapters provide the optimal charge based on the command/message received from the host smart charge receiver. In one embodiment, the host smart charge receiver comprises an artificial intelligence engine. The host smart charge receiver may provide the command/message to the one or more adapters based on information received from the artificial intelligence engine.

In one embodiment, the artificial intelligence engine determines at least one of an itinerary, an environmental condition, and a traffic condition of the host vehicle and communicates fourth sensory information to the processor. The processor is operable to determine the charging requirement of the host vehicle based on at least one of the itinerary, the environmental condition, and the traffic condition of the host vehicle in response to the fourth sensory information.

The host smart charge receiver may provide the command/message to the one or more adapters based on information received from at least one of a sensor module and the artificial intelligence engine. The one or more adapters 102 then provide optimal charge to the host vehicle. In an embodiment, the one or more adapters 102 comprise a plurality of provisions. The plurality of provisions comprises a plurality of sockets. The plurality of sockets comprises a plurality of male sockets. The plurality of sockets may comprise a plurality of female sockets. The plurality of sockets may also comprise a plurality of female sockets and a plurality of male sockets.

In an embodiment, the system further comprises the sensor module. The sensor module may be associated with the host vehicle. The sensor module may also be associated with the plurality of provisions. In one embodiment, the sensor module comprises at least one of one or more temperature sensors, one or more cameras, one or more giant magnetoresistance sensors, one or more weight sensors, one or more load cells, one or more infrared sensors, one or more proximity sensors, one or more ultrasonic sensors, one or more light detection and ranging (LIDAR) sensors, one or more voltage sensors, one or more light sensors, one or more capacitive load cells, one or more limit switches, one or more proximity sensors, and one or more accelerometers. In one embodiment, the sensor module is electrically and communicatively coupled to the one or more adapters and the host smart charge receiver.

In one embodiment, the sensor module determines the presence of the one or more adapters and communicates a first sensory information. As an example, the one or more limit switches determine the presence of the one or more adapters by contacting the one or more adapters and communicating a first sensory information. The processor determines the presence of the one or more adapters based on a first sensory information received from the sensor module. As another example, the one or more cameras may capture at least one of one or more images and one or more videos of the plurality of provisions. The one or more cameras may communicate the sensory information to the processor. The processor comprises the artificial intelligence engine. The processor using the artificial intelligence may perform image analysis (or video analytics) and analyze at least one of the one or more images and the one or more videos of the plurality of provisions. The processor extracts meaningful contents (e.g., shape, size, color, pattern, text, language, etc.) and determines the presence of the one or more adapters based on a predefined dataset. The artificial intelligence engine may comprise a machine learning algorithm (e.g., linear regression) that may be fed with predefined datasets for training. The machine learning algorithm may compare the meaningful contents with the predefined dataset and generate a match score. Based on the match score, the processor determines the presence of the one or more adapters.

The host vehicle is electrically coupled to at least one of the first entity 104 and the second entity 106 through the one or more adapters 102. In one embodiment, a single adapter may be configured to electrically couple the first entity 104 and the second entity 106. In another embodiment, a single adapter may be extended to have more sockets or provisions to extend coupling multiple entities to the host vehicle by plugging in one or more additional adapters.

The processor is operable to recognize at least one of the first entity and the second entity that are electrically coupled to the host vehicle through the one or more adapters based on the second sensory information received from the sensor module. In one embodiment, the sensor module (e.g., one or more voltage sensors) measures a first voltage and a second voltage received from the first entity and the second entity through the one or more adapters respectively and communicates a second sensory information. The processor then recognizes at least one of the first entity and the second entity that are electrically coupled to the host vehicle through the one or more adapters based on the second sensory information received from the sensor module. The processor recognizes the type of the first entity and the second entity based on the second sensory information received from the sensor module. For example, when the voltage is less than a predefined threshold, the processor determines that the entity is a vehicle. For example, when the voltage is greater than a predefined threshold, the processor determines that the entity is a charging station.

The processor then establishes the connection between the host vehicle, the first entity 104 and the second entity 106. The processor may establish the connection to form a network. The connection may be a daisy chain connection where each member can contribute and/or avail charge from the network. In one embodiment, the members (i.e., the host vehicle, the first entity 104, and the second entity 106) are connected in series. The daisy chain connection involves linking multiple entities in a series connection, where one charger is connected to another. The daisy chain connection may also be useful in scenarios where a single EV needs to be charged from multiple entities. The daisy chain connection may also be useful in scenarios where several EVs need to be charged and there are limited power sources available, or to simplify infrastructure setups in specific locations. The daisy chain connection may also be useful in scenarios where a host vehicle is having less charge, and the first entity can function as an extension cord to receive charge from the second entity and provide optimal charge to the host vehicle. The daisy-chain connection enables parallel charging of multiple electric vehicles at the same time.

In one embodiment, the host vehicle, the first entity, and the second entity are connected in series through one or more charging cables. In one embodiment, the connection is a wireless connection. In one embodiment, the connection is a wired connection. In one embodiment, the connection is adapted to transfer power between the host vehicle, the first entity, and the second entity. The transfer of charge between the host vehicle, the first entity, and the second entity may occur through at least one of wired connection and wireless connection.

The host vehicle may also be communicatively coupled to at least one of the first entity 104 and the second entity 106 through the connection. The host vehicle may be communicatively coupled through one of V2I (Vehicle-to-Infrastructure), V2I (Vehicle-to-Infrastructure), V2N (Vehicle-to-Network), V2V (Vehicle-to-Vehicle), V2P (Vehicle-to-Pedestrian), V2D (Vehicle-to-Device) and V2G (Vehicle-to-Grid) and Vehicle-to-Everything (V2X) communication. The host vehicle may be configured to communicate information or data (e.g., charging status, SoH, SoC, charging duration, charging time, charging sequence, charging requirement, charging specification, preferred cost of charging etc.) with the first entity 104 and the second entity 106. The information may comprise a message or a command. In an embodiment, the first entity comprises a first smart charge receiver and the second entity comprises a second smart charge receiver. The first smart charge receiver is configured to communicate with the host smart charge receiver 108 and the second smart charge receiver. The second smart charge receiver is configured to communicate with the host smart charge receiver 108 and the first smart charge receiver. In an embodiment, the first smart charge receiver, the host smart charge receiver 108, and the second smart charge receiver are configured to communicate with each other.

In one embodiment, the system is operable to receive at least one of the first charge and the second charge from the first entity and the second entity. In another embodiment, the system is operable to receive simultaneously the first charge and the second charge from the first entity and the second entity respectively through the one or more adapters. The first charge received from the first entity comprises one of a level 1 charging, a level 2 charging, and a level 3 charging. The second charge received from the second entity comprises one of a level 1 charging, a level 2 charging, and a level 3 charging.

In another embodiment, the system is operable to consolidate the first charge and the second charge and provide the optimal charge based on the charging specification of the host vehicle. In one embodiment, the system is operable to select one of the first charge and the second charge and provide the optimal charge based on at least one of the charging specification of the host vehicle, a charging requirement, and the cost of charging.

In an embodiment, the sensor module determines parameters related to at least one of a state-of-health (SoH), a state-of-charge (SoC), a host vehicle temperature, an environmental temperature and communicates third sensory information. The processor is operable to determine the charging requirement of the host vehicle based on the third sensory information received from a sensor module.

In one embodiment, the artificial intelligence engine communicates with one or more databases and extracts at least one of an itinerary, an environmental condition, and a traffic condition of the host vehicle, and the cost of charging. The artificial intelligence engine communicates at least one of the itinerary, the environmental condition, and the traffic condition of the host vehicle, and the cost of charging as the fourth sensory information. The processor then is operable to determine the charging requirement of the host vehicle based on at least one of third sensory information received from a sensor module and a fourth sensory information received from an artificial intelligence engine.

In one embodiment, the sensor module captures one of one or more images and one or more videos of at least one of the host vehicle, the first entity, and the second entity and communicates the fifth sensory information. The processor then recognizes an identity of at least one of the host vehicle, the first entity, and the second entity based on a fifth sensory information received from the sensor module. In one embodiment, the processor analyzes the one or more images and the one or more videos of at least one of the host vehicle, the first entity, and the second entity and recognizes the identity of at least one of the host vehicle, the first entity, and the second entity by performing image analysis.

The processor is operable to automatically provide the optimal charge to one or more first battery packs of the host vehicle based on at least one of the charging specification of the host vehicle, the charging requirement, and the cost of charging. In one embodiment, the one or more first battery packs comprise a plurality of cells. In one embodiment, the charging duration comprises a time period. In one embodiment, the one or more first battery packs comprises one of one or more identical batteries and one or more non-identical batteries. In one embodiment, the one or more first battery packs comprises one of one or more identical batteries and one or more non-identical batteries. The charging requirement comprises at least one of a charging sequence, a charging time, and a charging duration. The charging sequence comprises at least one of a level 1 charging, a level 2 charging, and a level 3 charging. The level 1 charging comprises trickle charging. The level 2 charging comprises regular charging. The level 3 charging comprises fast charging. In one embodiment, the charging sequence comprises a combination of at least one of a level 1 charging that corresponds to a first portion of the one or more first battery packs, a level 2 charging that corresponds to a second portion of the one or more first battery packs, and a level 3 charging that corresponds to a third portion of the one or more first battery packs. In one embodiment, the charging sequence comprises a combination of at least one of a level 1 charging that corresponds to the first charging time segment, a level 2 charging that corresponds to the second charging time segment, and a level 3 charging that corresponds to the third charging time segment. The charging time comprises a combination of at least one of a first charging time segment, a second charging time segment, and a third charging time segment.

In another embodiment, the processor is operable to automatically provide the optimal charge to the one or more first battery packs of the host vehicle based on at least one of the charging specification of the host vehicle, the charging requirement, and the cost of charging. In another embodiment, the processor is operable to receive a user input and provide optimal charge to the one or more first battery packs of the host vehicle based on the user input. The processor enables a user to provide the user input by selecting one of a drop-down menu through one of a vehicle computer system and an external device. In one embodiment, the drop-down menu comprises options of one of the charging specification of the host vehicle, the charging requirement, and the cost of charging. The external device comprises one of a smart phone, a tablet, a computer, a desktop, a tablet, a handheld device, and a smartwatch.

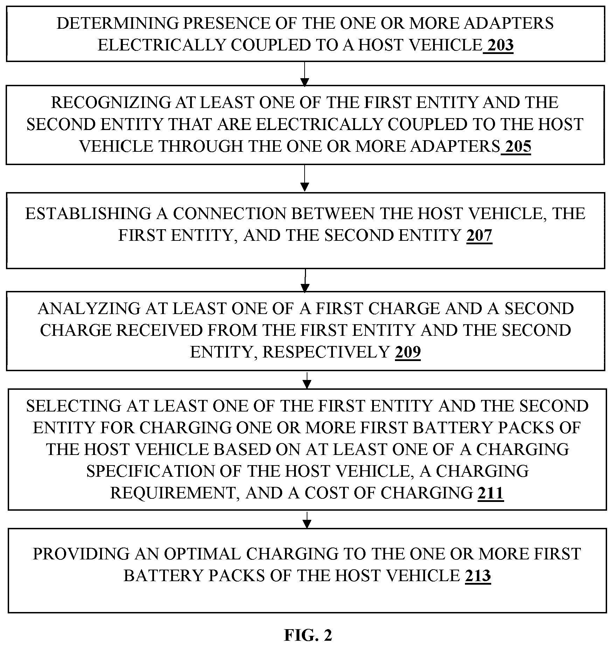

As an example, **FIG. 2** illustrates a method, according to one or more embodiments. The method comprises following technical steps: determining presence of one or more adapters electrically coupled to a host vehicle (at step 203); recognizing at least one of a first entity and a second entity that are electrically coupled to the host vehicle through the one or more adapters (at step 205); establishing a connection between the host vehicle, the first entity, and the second entity (at step 207); analyzing at least one of a first charge and a second charge received from the first entity and the second entity, respectively (at step 209); selecting at least one of the first entity and the second entity for charging one or more first battery packs of the host vehicle based on at least one of a charging specification of the host vehicle, a charging requirement, and a cost of charging (at step 211); and providing an optimal charge to the one or more first battery packs of the host vehicle (at step 213).

The method further comprises: determining through an artificial intelligence engine, at least one of an itinerary, an environmental condition, and a traffic condition of the host vehicle and communicating a fourth sensory information. The method further comprises: determining the charging requirement of the host vehicle based on at least one of the itinerary, the environmental condition, and the traffic condition of the host vehicle.

The method further comprises: determining the presence of the one or more adapters based on first sensory information received from a sensor module. The method further comprises: simultaneously receiving the first charge and the second charge from the first entity and the second entity respectively through the one or more adapters. The method further comprises: consolidating the first charge and the second charge and providing the optimal charge based on the charging specification of the host vehicle. The method further comprises: selecting one of the first charge and the second charge and providing the optimal charge based on at least one of the charging specification of the host vehicle and the cost of charging.

In one embodiment, the method further comprises: communicating, through the sensor module, third sensory information based on determination of parameters related to at least one of a state-of-health (SoH), a state-of-charge (SoC), a host vehicle temperature, an environmental temperature and communicates third sensory. In one embodiment, the method further comprises: determining the charging requirement of the host vehicle based on the third sensory information received from the sensor module.

In one embodiment, the method further comprises: determining the charging requirement of the host vehicle based on at least one of a third sensory information received from a sensor module and a fourth sensory information received from an artificial intelligence engine. In one embodiment, the method further comprises: communicating with one or more databases and extracting at least one of an itinerary, an environmental condition, and a traffic condition of the host vehicle, and the cost of charging using the artificial intelligence engine and sharing them as the fourth sensory information.

In one embodiment, the method further comprises: recognizing an identity of at least one of the host vehicle, the first entity, and the second entity. The method further comprises: capturing, through a sensor module, one of one or more images and one or more videos of at least one of the host vehicle, the first entity, and the second entity and communicating a fifth sensory information. The method further comprises: analyzing the one or more images and the one or more videos of at least one of the host vehicle, the first entity, and the second entity and recognizes the identity of at least one of the host vehicle, the first entity, and the second entity by performing image analysis.

In one embodiment, the method further comprises: automatically providing the optimal charge to the one or more first battery packs of the host vehicle based on at least one of the charging specification of the host vehicle, the charging requirement, and the cost of charging. In another embodiment, the method further comprises: receiving a user input and providing the optimal charge to the one or more first battery packs of the host vehicle based on the user input.

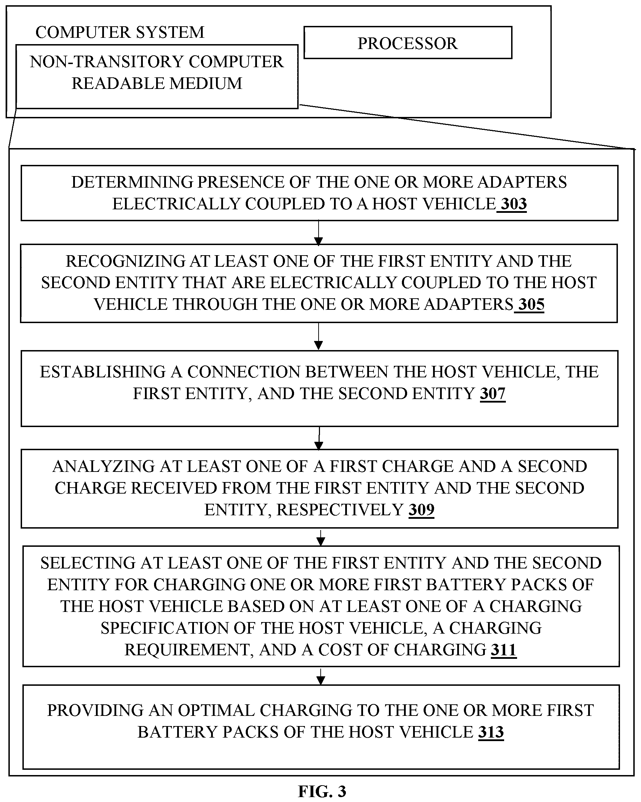

As an example, **FIG. 3** illustrates a non-transitory computer readable storage medium, according to one or more embodiments. The non-transitory computer readable storage medium comprising a sequence of instructions, which when executed by a processor causes: determining presence of one or more adapters electrically coupled to a host vehicle (at step 303); recognizing at least one of a first entity and a second entity that are electrically coupled to the host vehicle through the one or more adapters (at step 305); establishing a connection between the host vehicle, the first entity, and the second entity (at step 307); analyzing at least one of a first charge and a second charge received from the first entity and the second entity, respectively (at step 309); selecting at least one of the first entity and the second entity for charging one or more first battery packs of the host vehicle based on at least one of a charging specification of the host vehicle, a charging requirement, and a cost of charging (at step 311); and providing an optimal charge to the one or more first battery packs of the host vehicle (at step 313).

In one embodiment, the non-transitory computer readable medium further causes: communicating, through an artificial intelligence engine, a fourth sensory information based on determination of at least one of an itinerary, an environmental condition, and a traffic condition of the host vehicle. The non-transitory computer readable medium further causes: determining the charging requirement of the host vehicle based on at least one of an itinerary, an environmental condition, and a traffic condition of the host vehicle.

In one embodiment, the non-transitory computer readable medium further causes: determining the presence of the one or more adapters based on a sensory information received from a sensor module. The non-transitory computer readable medium further causes: simultaneously receiving the first charge and the second charge from the first entity and the second entity respectively through the one or more adapters. In one embodiment, the non-transitory computer readable medium further causes: consolidating the first charge and the second charge and providing the optimal charge based on the charging specification of the host vehicle. In one embodiment, the non-transitory computer readable medium further causes: selecting one of the first charge and the second charge and providing the optimal charge based on at least one of the charging specification of the host vehicle and the cost of charging.

In one embodiment, the non-transitory computer readable medium further causes: determining, through a sensor module, parameters related to at least one of a state-of-health (SoH), a state-of-charge (SoC), a host vehicle temperature, an environmental temperature and communicates a third sensory information. The non-transitory computer readable medium further causes: determining the charging requirement of the host vehicle based on the third sensory information received from a sensor module. In one embodiment, the non-transitory computer readable medium further causes: communicating with one or more databases and extracting at least one of an itinerary, an environmental condition, and a traffic condition of the host vehicle, and the cost of charging. In one embodiment, the non-transitory computer readable medium further causes: determining the charging requirement of the host vehicle based on at least one of a third sensory information received from a sensor module and a fourth sensory information (e.g., at least one of an itinerary, an environmental condition, and a traffic condition of the host vehicle) received from an artificial intelligence engine.

In one embodiment, the non-transitory computer readable medium further causes: capturing, through the sensor module, one of one or more images and one or more videos of at least one of the host vehicle, the first entity, and the second entity, and communicates a fifth sensory information. The non-transitory computer readable medium further causes: recognizing an identity of at least one of the host vehicle, the first entity, and the second entity based on the fifth sensory information received from a sensor module. In one embodiment, the non-transitory computer readable medium further causes: analyzing the one or more images and the one or more videos of at least one of the host vehicle, the first entity, and the second entity and recognizes the identity of at least one of the host vehicle, the first entity, and the second entity by performing image analysis.

In one embodiment, the non-transitory computer readable medium further causes: automatically providing the optimal charge to the one or more first battery packs of the host vehicle based on at least one of the charging specification of the host vehicle, the charging requirement, and the cost of charging. In another embodiment, the non-transitory computer readable medium further causes: receiving a user input and providing the optimal charge to the one or more first battery packs of the host vehicle based on the user input.

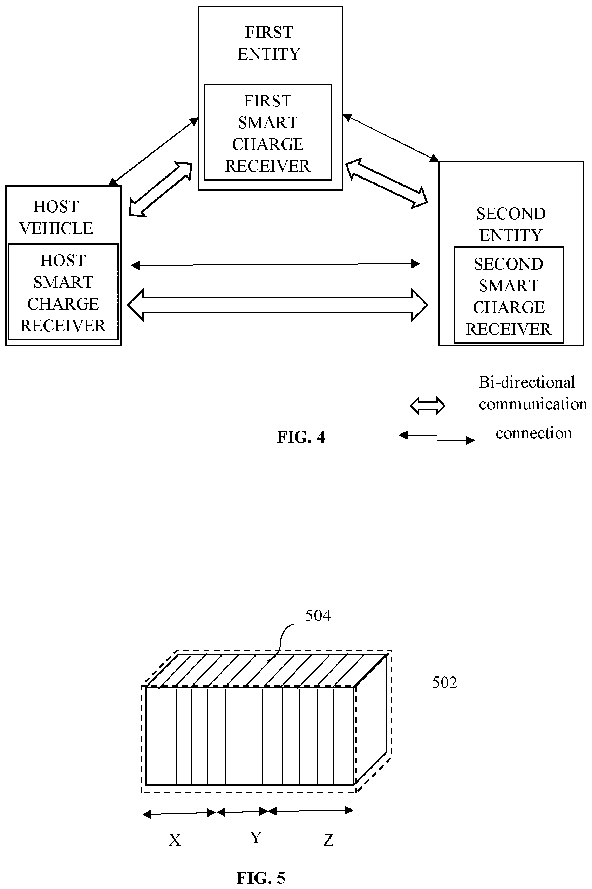

As an example, **FIG. 4** illustrates a block diagram of a system, according to one or more embodiments. The system comprises a host vehicle that is adjacent to a first entity and a second entity. The host vehicle comprises a host smart charge receiver capable of receiving charge from multiple entities (e.g., the first entity, the second entity, etc.). The first entity may be closer to the host vehicle than the second entity.

The host smart charge receiver comprises the processor. The processor is configured to determine the presence of adapters and recognize the first entity and the second entity. The processor is also capable of determining the type of entity (e.g., charging station, vehicle, etc.). The processor is also capable of determining the type of charging received from the first entity and the second entity. The type of charge may be fast charging, slow charging, regular charging, etc.

The processor comprises the artificial intelligence engine that determines at least one of the itinerary, the environmental condition, and the traffic condition of the host vehicle. The artificial intelligence engine then automatically determines the charging requirement of the host vehicle. The artificial intelligence engine may determine the charging requirement based on at least one of the itinerary, the environmental condition, and the traffic condition of the host vehicle. For example, if the host vehicle has the itinerary (e.g., travel plan) of around 100 kilometers, the charging requirement of the host vehicle is high and therefore the host smart charge receiver may request and receive charge from multiple entities based on their state-of-charge (SoC). For another example, if the host vehicle has the itinerary (e.g., travel plan) of around 10 kilometers, the charging requirement of the host vehicle is low and therefore the host smart charge receiver may request and receive charge from a single entity based on its state-of-charge (SoC). Similarly, the artificial intelligence engine may determine the charging requirement based on the traffic condition. For example, if the host vehicle is stranded in heavy traffic, the charging requirement of the host vehicle is high and therefore the host smart charge receiver may request and receive a predefined charge from multiple entities or a single entity based on their state-of-charge (SoC). Similarly, the artificial intelligence engine may determine the charging requirement based on the traffic condition. For example, if the host vehicle is stranded in heavy traffic, the charging requirement of the host vehicle is high and therefore the host smart charge receiver may request and receive predefined charge from multiple entities based on their state of charge.

The first entity may comprise the first smart charge receiver and the second entity may comprise the second smart charge receiver. The host smart charge receiver is operable to communicate message and/or command to at least one of the first smart charge receiver and the second smart charge receiver and request charge to one or more first battery packs of the host vehicle. The authorized persons of the first entity and the second entity may approve the request or deny the request. The first smart charge receiver and the second smart charge receiver may transfer power to provide charging to the host vehicle based on the command and/or message.

As an example, **FIG. 5** illustrates a battery pack 502 of the host vehicle comprising an individual battery, according to one or more embodiments. The battery pack 502 herein comprises an individual battery. The battery comprises a plurality of cells 504. The battery pack comprises a first portion X, a second portion Y, and a third portion Z. The first portion, X, may comprise the first plurality of cells among the plurality of cells of the battery. The second portion, Y, may comprise a second plurality of cells among the plurality of cells of the battery. The third portion, Z, may comprise a third plurality of cells among the plurality of cells of the battery.

The first portion X, the second portion Y, and the third portion Z may be categorized based on the state-of-health information at the respective portions. The first portion X may comprise state-of-health information. The second portion Y may comprise second state-of-health information. The third portion Z may comprise third state-of-health information. In an embodiment, the first portion may refer to a portion of the battery having degraded cells. The second portion may refer to a portion of the battery having healthy cells. The third portion may refer to a portion of the battery having moderately degraded cells.

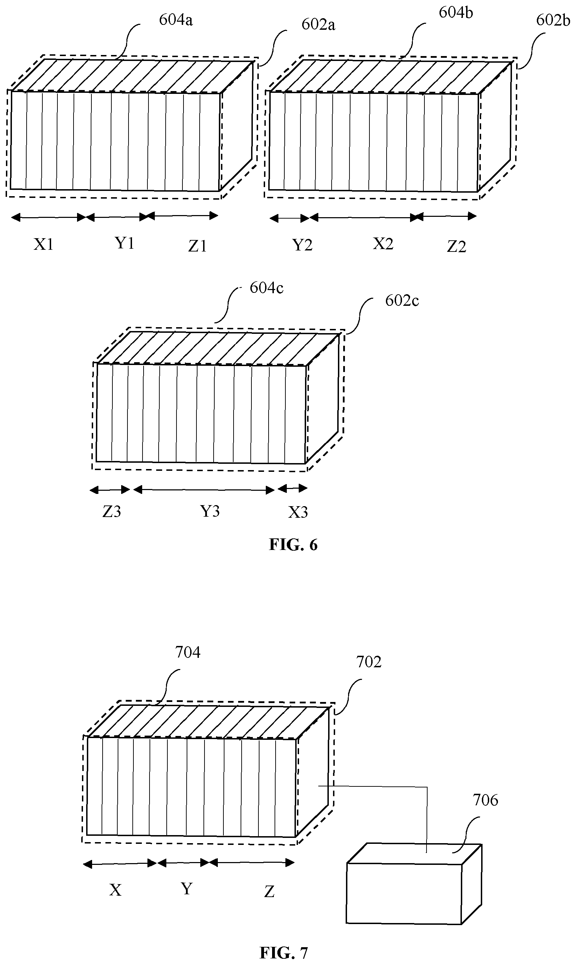

As an example, **FIG. 6** illustrates a battery pack of the host vehicle comprising a plurality of batteries, according to one or more embodiments. The battery pack herein comprises a first battery 602a, a second battery 602b, and a third battery 602c. The first battery 602a, the second battery 602b, and the third battery 602c may be identical batteries. The first battery 602a, the second battery 602b, and the third battery 602c may be non-identical batteries. In an embodiment, each battery of the battery pack may comprise an equal capacity to store and deliver power. In another embodiment, each battery of the battery pack may comprise a different capacity to store and deliver power.

The first battery 602a may comprise a plurality of first cells 604a. The second battery 602b may comprise a plurality of second cells 604b. The third battery 602c may comprise a plurality of third cells 604c. Each battery of the battery pack is connected electrically. The host smart charge receiver receives power and charges each battery of the battery pack that is electrically connected. The host smart charge receiver may receive power and charge each battery of the battery pack randomly, serially, or parallelly.

The host smart charge receiver may charge at least one of a first portion X, a second portion Y, and a third portion Z of the battery pack. The first portion X of the battery pack refers to degraded cells from each battery of the battery pack (X= X1+X2+X3). The second portion Y of the battery pack refers to healthy cells from each battery of the battery pack (Y= Y1+Y2+Y3). The third portion Z of the battery pack refers to moderately degraded cells from each battery of the battery pack (Z= Z1+Z2+Z3). Healthy cells may be contiguously or non-contiguously located within the same battery. Similarly, degraded and moderately degraded cells may be contiguously or non-contiguously located within the same battery.

The host smart charge receiver is configured to map the battery pack based on the state-of-health information. In an embodiment, the host smart charge receiver maps at least one of the degraded cells, the healthy cells, and the moderately degraded cells of the battery pack. The host smart charge receiver, upon performing mapping of the battery pack, determines the charging sequence based on the state-of-health information and the charging time available. The host smart charge receiver may assign the charging sequence to a particular portion of the battery pack. In an embodiment, the host smart charge receiver assigns the charging sequence to only the healthy cells and the moderately degraded cells of the battery pack. The host smart charge receiver may ignore charging the degraded cells.

As an example, **FIG. 7** schematically shows a battery pack comprising a battery 702 and a battery management system 706, according to one or more embodiments. The battery 702 in turn comprises a plurality of cells 704. The battery management system 706 may include a microprocessor, microcontroller, programmable digital signal processor, or another programmable device. The battery management system 706 may also or alternatively comprise an application specific integrated circuit, a programmable gate array or programmable array logic, a programmable logic device or a digital signal processor. Where the battery management system 706 comprises a programmable device such as the microprocessor, microcontroller or programmable digital signal processor mentioned above, the processor may also comprise computer executable code which controls the operation of the programmable device. In an embodiment, the battery management system 706 resides within a vehicle. The battery management system 706 determines the state-of-health of the battery pack and communicates to the host smart charge receiver.

In an embodiment, the battery management system 706 is configured to: measure a first battery property and temperature of a battery in the vehicle; (i) calculating the state-of-health of the battery cell for the determined battery attributes using a predetermined model$_{calc}$ (ii) Providing a function f for estimating the cell degradation rate; updating the state-of-health estimated in the previous time step according to:

$$SoH_{est} \leftarrow SoH_{est} + f \cdot dt + K \cdot (SoH_{calc} - SoH_{est})$$

where K is a gain factor that depends on the operating conditions of the vehicle, and where K is modified using a reinforcement learning agent for each time step.

In another embodiment, the battery management system 706 estimates state-of-health characteristics of a battery pack in the vehicle. The estimation of the SOH includes: charging and discharging the battery pack at least one time within an upper region of a State-of-charge (SOC) window. In this case, the battery pack is charged to a first predetermined level in the upper region of the SOC window during the first time period. A first charge current impulse then discharges the battery pack for pushing the SOC level of the battery pack to a level above the first predetermined level and outside the SOC window, during a second time period. An electrical machine then discharges the battery pack to a second predetermined level within the SOC window.

The estimation of the SOH further includes: charging and discharging the battery pack at least one time within a lower region of the SOC window. In this case, the battery pack is charged to a third predetermined level in the SOC window, during a third time period. An electrical machine then discharges the battery pack to a fourth predetermined level in the SOC window. A second current impulse then discharges the battery pack for pushing the SOC level of the battery pack to a level below the fourth predetermined level and below the SOC window, during a fourth time period.

The estimation of the SOH further includes: calibrating by the battery management system 706 comprised in the vehicle by using the reached levels outside the SOC window for determining correct upper and lower edges of the current SOC window; and estimating the SOH characteristics of the battery pack during the charge and discharge periods by using the battery management system 706 for determining the condition of the battery pack in comparison to a new and unused battery pack by comparing the current SOC window with a standard SOC window. In an embodiment, the first and third time period is longer than the second and fourth time period, respectively. In another embodiment, the first predetermined level represents a higher voltage than the second predetermined level and the third predetermined level represents a higher voltage than the fourth predetermined level.

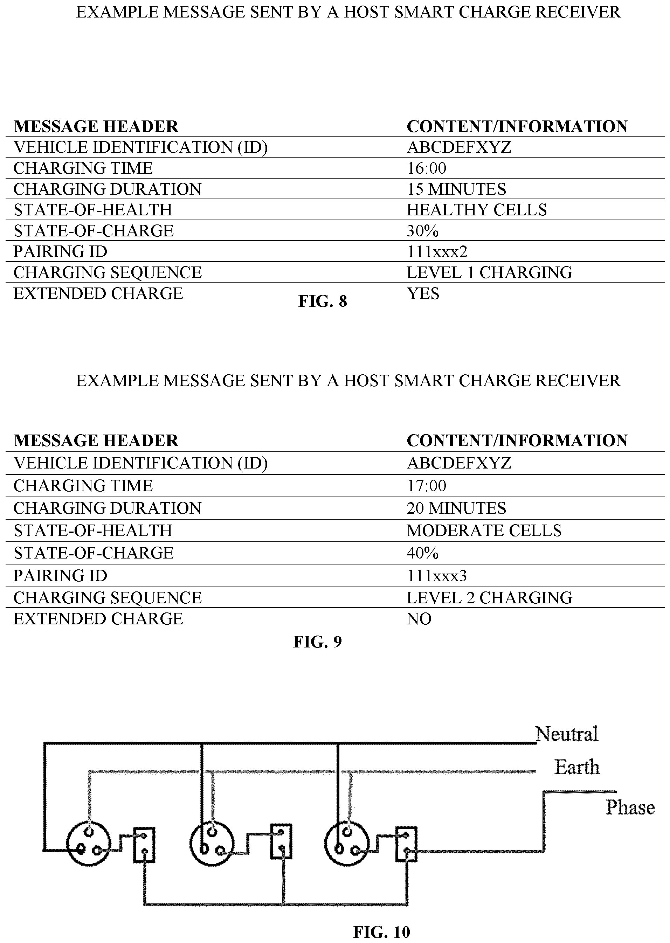

As an example, **FIG. 8** illustrates a message sent by a host smart charge receiver to a first entity, according to one or more embodiments. In an embodiment, the message is similar to HL7 protocol. The sample message shown in FIG. 8 comprises fields such as vehicle ID, charging time, charging duration, charging sequence, state-of-charge (SoC), pairing ID, state-of-health, extended charge. The first entity herein may be a vehicle.

The vehicle ID may be a serial identification number or a tag associated with the electric vehicle configured to identify and locate the electric vehicle. The charging time may be the scheduled time/allotted time provided for optimally charging the vehicle. The state-of-health refers to state-of-health information of different portions of the battery pack. The state-of-charge refers to state-of-charge information of different portions of the battery pack. The extended charge refers to providing charge by the first entity in addition to charge received from the second entity. The extended charge field may have attributes as "Yes" or "No". If "Yes", the host vehicle may receive charge from the first entity in addition to charge received from the second entity. If "No", the host vehicle may only receive charge from the first entity or the second entity. The first entity, upon receiving the message, decodes and extracts the information for charging the vehicle. The first smart charge receiver within the first entity then may supply power according to the information received via the message to optimally charge the host vehicle.

As an example, **FIG. 9** illustrates a message sent by a host smart charge receiver to a first entity, according to one or more embodiments. In an embodiment, the message is similar to HL7 protocol. The sample message shown in FIG. 9 comprises fields such as vehicle ID, charging time, charging duration, charging sequence, state-of-charge (SoC), pairing ID, and state-of-health. The first entity herein may be a charging station.

The vehicle ID may be a serial identification number, or a tag associated with the electric vehicle configured to identify and locate the electric vehicle. The charging time may be the scheduled time/allotted time provided for optimally charging the vehicle. The state-of-health refers to state-of-health information of different portions of the battery pack. The state-of-charge refers to state-of-charge information of different portions of the battery pack. The extended charge refers to providing charge by a first entity in addition to charge received from a second entity. The extended charge field may have attributes as "Yes" or "No". If "Yes", the host vehicle may receive charge from the first entity in addition to charge received from the second entity. If "No", the host vehicle may receive charge only from the first entity or the second entity. The first entity upon receiving the message decodes and extracts the information for charging the vehicle. The first smart charge receiver within the first entity then may supply power according to the information received via the message to optimally charge the host vehicle.

As an example, FIG. 10 depicts a view that illustrates an embodiment of the main adapter having more sockets in relation to a power extension cord. The main adapter may be the adapter electrically coupled to the host vehicle. The main adapter may comprise a plurality of sockets. The plurality of sockets may be at least one of a plurality of female sockets and a plurality of male sockets.

In an embodiment, the main adapter comprises two input sockets and one output cable. The main adapter is extended to have more sockets (i.e., more inputs) by coupling one or more subsequent/additional adapters to the main adapter. The subsequent adapters coupled to the main adapter provide provisions to receive more inputs. The main adapter, extended by coupling the additional adapters, comprises provisions similar to the power extension cord as shown in FIG. 10. The power extension cord may provide multiple outputs from a single input, whereas the main adapter provides a single output from multiple inputs.

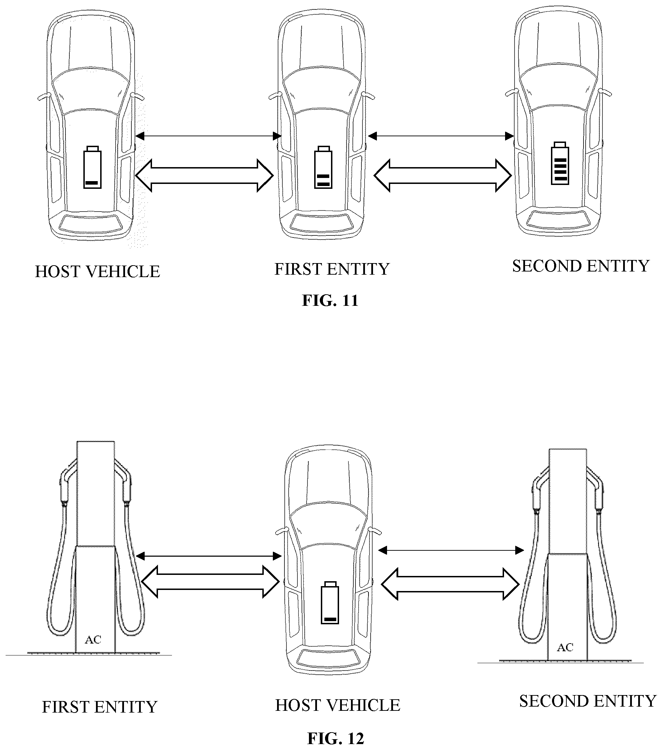

As an example, **FIG. 11** illustrates a power transfer between a host vehicle, a first entity, and a second entity, according to one or more embodiments. The first entity and the second entity described herein may be a first vehicle and a second vehicle, respectively. The first entity may be the intermediary entity which receives the charge from the second entity and provides the charge to the battery packs of the host vehicle.

The first entity may receive the command/message from the host smart charge receiver of the host vehicle to supply charge to the host vehicle. The first entity may act as an extension charger that is configured to only supply the second charge to the host vehicle and bypass the first charge. The second charge may be the charge received from the second entity. The first charge may be the charge received from the first entity. In an embodiment, the first entity may provide the first charge and the second charge to the host vehicle.

In one embodiment, the host smart charge receiver may receive both the first charge and the second charge. In another embodiment, the host smart charge receiver may receive the first charge and not the second charge. In one embodiment, the host vehicle, the first entity, and the second entity are connected via a daisy chain connection. The members of the daisy chain connection form a network. Each member of the daisy chain connection can contribute and/or avail charge.

As an example, **FIG. 12** illustrates a power transfer between a host vehicle, a first entity, and a second entity, according to one or more embodiments. The first entity and the second entity described herein may be the first charging station and the second charging station, respectively.

The first entity and the second entity may receive the command/message from the host smart charge receiver of the host vehicle to supply charge to the host vehicle. The first entity may act as an extension charger that is configured to only supply the second charge to the host vehicle and bypass the first charge. The second charge may be the charge received from the second entity. The first charge may be the charge received from the first entity. In an embodiment, the first entity may provide the first charge and the second charge to the host vehicle.

In one embodiment, the host vehicle, the first entity, and the second entity are connected via a daisy chain connection. The members of the daisy chain connection form a network. Each member of the daisy chain connection can contribute and/or avail charge.

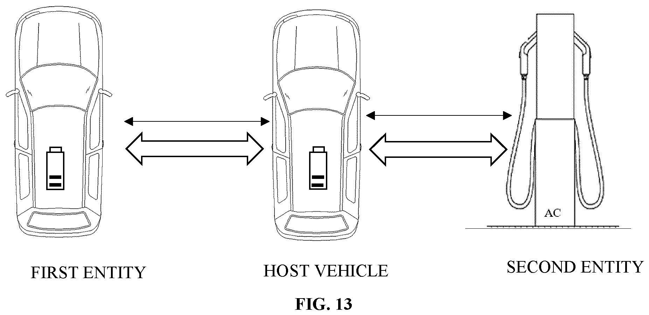

As an example, **FIG. 13** illustrates a power transfer between a host vehicle, a first entity, and a second entity, according to one or more embodiments. In this embodiment, the second entity may be the charging station and the first entity may be the vehicle. The host vehicle, comprising the host smart charge receiver, is capable of receiving charge from the first entity (e.g., the vehicle) and the second entity (e.g., the charging station).

Technical Problem 2: Suppose the vehicle is stranded due to weather or traffic for an extended period of time. The problem is that when one or more cars are losing power or have reached below a safe level, there is no way to combine resources to extend power to one vehicle. So, it would be nice to be able to receive power from multiple resources (e.g., other cars stuck in a similar situation) until the situation changes. For example, if one car has lost power, the operator can request assistance from other cars nearby. However, when all the cars are below a discharge threshold (e.g., a charge level preset to ensure that enough charge remains for desired operation and not leaving the car stranded), receiving a charge from one vehicle may not be possible or enough. Also, if the cars are stranded, it may be difficult for a car with discharge capability to reach the car in need. Thus, a system should be provided that can receive charge from multiple resources and through a chain of resources.

Technical Solution 2: An adapter is provided to receive multiple inputs. Should be noted that adapters can be multiplied by adding additional adapters (e.g., suppose each car is provided an adapter with two inputs and adding an extra adapter, from another car, the car can be connected to three resources at one time, one adapter + adapter = two adapters and adding one more could make it three or more). The adapter can have more than two inputs, but a preferred adapter would contain one output with two inputs. This would allow a car to be connected to a charger and another source when using an adapter. A smart charging system provided in the car can manage and control the reception of charge.

In an aspect, the second entity/resource (e.g., the charging station) can be used for fast charging, while the first entity/resource (e.g., another car) can be used for slow charging. The smart system can select the battery cells based on the type of charging. The system can monitor for all health issues while receiving charge from two or more resources. The system can switch between resources based on price (e.g., cost associated with charging where the charging station may be cheaper than the car charging), or the type of charge (e.g., fast, or slow).

Using the adapter, the system can also allow a car to either by-pass or add to charge received from another car. For example, if the car requiring a charge is too far when there is another car closer to it, using the adapter, the stranded car can receive a charge from the distant car that plugged into the closer car, wherein the closer car acts as an extension cord, or adds charge in addition to the charge received from the distant car. In an aspect, a daisy chain can be established where each member of the daisy chain can contribute.

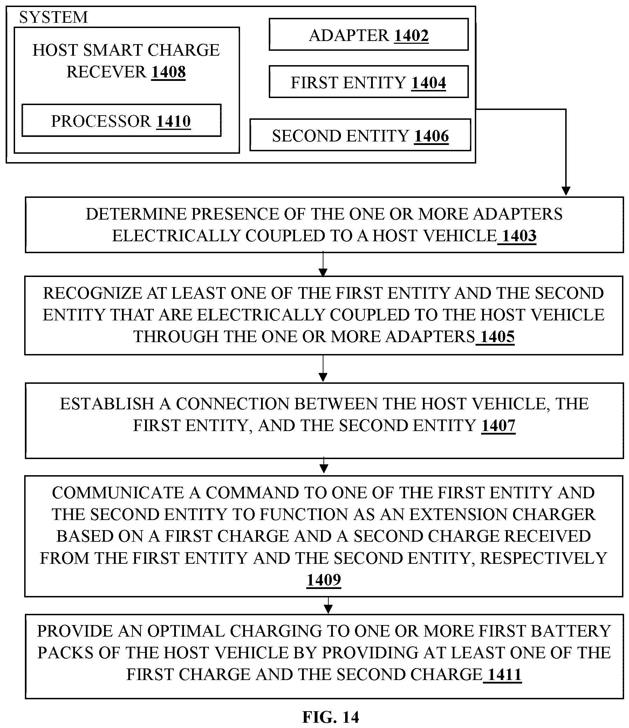

As an example, **FIG. 14** illustrates a system, according to one or more embodiments. The system comprises one or more adapters 1402; a first entity 1404; a second entity 1406; and a host smart charge receiver 1408. The host smart charge receiver 1408 comprises a processor 1410 storing instructions in non-transitory memory that, when executed, causes the processor 1410 to: determine presence of the one or more adapters 1402 electrically coupled to a host vehicle (at step 1403); recognize at least one of the first entity 1404 and the second entity 1406 that are electrically coupled to the host vehicle through the one or more adapters 1402 (at step 1405); establish a connection between the host vehicle, the first entity 1404, and the second entity 1406 (at step 1407); communicate a command to one of the first entity 1404 and the second entity 1406 to function as an extension charger based on a first charge and a second charge received from the first entity 1404 and the second entity 1406, respectively (at step 1409); and provide an optimal charge to one or more battery packs of the host vehicle by providing at least one of the first charge and the second charge (at step 1411). The first entity 1404 may be one of a vehicle, a charging station, and a solar panel station. The second entity 1406 may be one of a vehicle, a charging station, and a solar panel station. In one embodiment, the first entity 1404 and the second entity 1406 are similar entities. In another embodiment, the first entity 1404 and the second entity 1406 are dissimilar entities. In one embodiment, the one or more battery packs comprises a plurality of cells.

The host vehicle is adjacent to the first entity 1404 and the second entity 1406. The first entity 1404 is closer to the host vehicle than the second entity 1406. The processor 1410 is operable to recognize at least one of the first entity 1404, and the second entity 1406 that are electrically coupled to the host vehicle through the one or more adapters 1402. In one embodiment, the processor 1410 comprises an artificial intelligence engine. The artificial intelligence engine analyzes the charge received from the first entity 1404 and the second entity 1406. The artificial intelligence engine then communicates information to the host smart charge receiver 1408. The processor 1410 then recognizes at least one of the first entity 1404 and the second entity 1406 based on the information. The processor 1410 is also capable of recognizing the type of the first entity 1404 and the second entity 1406 based on the information.

In one embodiment, the one or more adapters 1402 are extended to have more sockets by electrically coupling one or more subsequent adapters to receive input power from a subsequent entity. The one or more adapters 1402 may be operable to receive input power simultaneously from the first entity 1404, the second entity 1406, and other subsequent entities coupled via the subsequent entities. The one or more adapters 1402 provide the input power received from the first entity 1404 and the second entity 1406 to the host smart charge receiver.

In one embodiment, the system further comprises a sensor module. The sensor module comprises at least one of one or more temperature sensors, one or more cameras, one or more giant magnetoresistance sensors, one or more weight sensors, one or more load cells, one or more infrared sensors, one or more proximity sensors, one or more ultrasonic sensors, one or more light detection and ranging (LIDAR) sensors, one or more voltage sensors, one or more light sensors, one or more capacitive load cells, one or more limit switches, one or more proximity sensors, and one or more accelerometers. In one embodiment, the sensor module is electrically and communicatively coupled to the one or more adapters and the host smart charge receiver 1408.

In an embodiment, the processor 1410 recognizes at least one of the first entity and the second entity based on at least one of one or more images and one or more videos captured by the sensor module. The processor 1410 analyzes at least one of the one or more images and the one or more videos captured by the sensor module and extracts information through an artificial intelligence engine to recognize at least one of the first entity 1404 and the second entity 1406.

In another embodiment, the sensor module captures one of one or more images and one or more videos of at least one of the host vehicle, the first entity 1404, and the second entity 1406 and communicates fifth sensory information. The processor 1410 recognizes an identity of at least one of the host vehicle, the first entity 1404, and the second entity 1406 based on the fifth sensory information received from the sensor module. In one embodiment, the processor analyzes the one or more images and the one or more videos of at least one of the host vehicle, the first entity 1404, and the second entity 1406 and recognizes an identity of at least one of the host vehicle, the first entity 1404, and the second entity 1406 by performing image analysis.

The host vehicle, the first entity 1404 and the second entity 1406 are connected between each other to form a network. The processor 1410 establishes the connection between the host vehicle, the first entity 1404, and the second entity 1406. In one embodiment, the connection between the host vehicle, the first entity 1404, and the second entity 1406 is a daisy chain connection. In one embodiment, the host vehicle, the first entity 1404, and the second entity 1406 are connected in series through one or more charging cables. In one embodiment, the connection is a wireless connection. In another embodiment, the connection is a wired connection. The connection may be adapted to transfer power between the host vehicle, the first entity 1404, and the second entity 1406.

The processor 1410 enables the host smart charge receiver to communicate (i.e., transmit and receive) information from the first entity 1404 and the second entity 1406. In an embodiment, the host vehicle may communicate a message/command to one of the first entity 1404 and the second entity 1406. The host vehicle may be communicatively and electrically coupled to at least one of the first entity 1404 and the second entity 1406.

The first entity 1404 may comprise a first smart charge receiver. The second entity 1406 may comprise a second smart charge receiver. In one embodiment, the host smart charge receiver is communicatively coupled to a second smart charge receiver of the first entity and a third smart charge receiver of the second entity. The host smart charge receiver, the second smart charge receiver, and the third smart charge receiver are operable to perform one of contribute and avail power transfer between each other.

The first entity 1404 may receive a message or a command requesting charge to the host smart charge receiver 1408. The second entity 1406 may receive a message or a command requesting charge to the host smart charge receiver 1408. The authorized persons of the first entity 1404 and the second entity 1406 may approve the request or deny the request. The message command may comprise the charge requirement (i.e., charge required by the host vehicle). Once the request is approved, the first smart charge receiver and the second smart charge receiver transfer the power (e.g., charge requested) to the host vehicle. In an embodiment, the host smart charge receiver may be configured to determine the state-of-charge of the first entity 1404, and the second entity 1406 and communicate a message/command requesting charge to at least one of the first entity 1404, and the second entity 1406. The first entity 1404 may act as an extension charger based on the message/command. Similarly, the second entity 1406 may act as an extension charger based on the message/command. The extension charger is a charger that couples the host vehicle and the other entity. The extension charger may disconnect the power from its one battery pack and only transfers the power from the other entity to the host vehicle. In one embodiment, the extension charger may provide the power from its own battery pack in addition to the power from the other entity to the host vehicle. In one embodiment, the second entity is coupled to the host vehicle through the first entity. In one embodiment, the first entity disconnects the first charge and provides the second charge to the host vehicle. In one embodiment, the first entity provides the first charge in addition to the second charge to the host vehicle.

Once the connection is established, the system is then operable to receive at least one of the first charge and the second charge from the first entity 1404, and the second entity 1406. The first charge is the power received from the first entity 1404 and the second charge is the power received from the second entity 1406. In one embodiment, the system is operable to receive simultaneously the first charge and the second charge from the first entity 1404, and the second entity 1406 respectively through the one or more adapters 1402. In another embodiment, the system is operable to consolidate the first charge and the second charge and provide the optimal charge based on at least one of a charging specification and a charging requirement of the host vehicle. In another embodiment, the system is operable to disconnect the first charge and provide the second charge as the optimal charge. The system may provide optimal charge to the one or more battery packs of the host vehicle by providing at least one of the first charge and the second charge.

In one embodiment, the system may provide the optimal charge to the one or more first battery packs of the host vehicle based on the charging requirement, the charging specification, and the cost of charging. The artificial intelligence engine determines at least one of an itinerary, an environmental condition, and a traffic condition of the host vehicle and communicates a fourth sensory information. The processor then determines the charging requirement of the host vehicle based on the fourth sensory information.

In one embodiment, the sensor module determines parameters related to at least one of a state-of-health (SoH), a state-of-charge (SoC), a host vehicle temperature, an environmental temperature and communicates third sensory information. The processor then determines a charging requirement of the host vehicle based on a third sensory information received from a sensor module.

In one embodiment, the processor is operable to determine a charging requirement of the host vehicle based on at least one of third sensory information received from a sensor module and fourth sensory information received from an artificial intelligence engine. The fourth sensory information comprises one of an itinerary, an environmental condition, and a traffic condition of the host vehicle.

In one embodiment, the charging requirement comprises at least one of a charging sequence, a charging time, and a charging duration. The charging sequence comprises at least one of a level 1 charging, a level 2 charging, and a level 3 charging. The level 1 charging comprises trickle charging. The level 2 charging comprises regular charging. The level 3 charging comprises fast charging. The charging time comprises a combination of at least one of a first charging time segment, a second charging time segment, and a third charging time segment. The charging sequence comprises a combination of at least one of a level 1 charging that corresponds to the first charging time segment, a level 2 charging that corresponds to the second charging time segment, and a level 3 charging that corresponds to the third charging time segment.

In one embodiment, the first charge received from the first entity comprises one of a level 1 charging, a level 2 charging, and a level 3 charging. In another embodiment, the second charge received from the second entity comprises one of a level 1 charging, a level 2 charging, and a level 3 charging.

In one embodiment, the charging sequence comprises a combination of at least one of a level 1 charging that corresponds to a first portion of the one or more first battery packs, a level 2 charging that corresponds to a second portion of the one or more first battery packs, and a level 3 charging that corresponds to a third portion of the one or more first battery packs.

In one embodiment, the processor 1410 is operable to automatically provide the optimal charge to the one or more first battery packs of the host vehicle based on at least one of a charging specification of the host vehicle, a charging requirement, and a cost of charging. In another embodiment, the processor 1410 is operable to receive a user input and provide optimal charge to the one or more first battery packs of the host vehicle based on the user input. In one embodiment, the processor 1410 enables a user to provide the user input by selecting one of a drop-down menu through one of a vehicle computer system and an external device. In one embodiment, the external device comprises one of a smart phone, a tablet, a computer, a desktop, a tablet, a hand-held device, and a smartwatch. The drop-down menu comprises options of one of a charging specification of the host vehicle, a charging requirement, and a cost of charging.

In one embodiment, the artificial intelligence engine is operable to analyze the first charge, the second charge, and determine a predefined first charge and a predefined second charge to be availed from the first entity and the second entity, respectively. The artificial intelligence engine is then operable to determine the predefined first charge and the predefined second charge to be availed from the first entity 1404 and the second entity 1406 based on a charging requirement of the host vehicle. The host smart charge receiver 1408 is operable to receive the predefined first charge and the predefined second charge from the first entity 1404 and the second entity 1406, respectively.

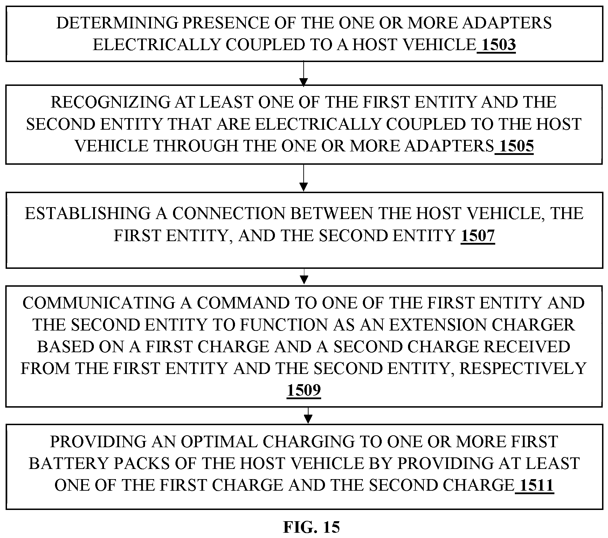

As an example, **FIG. 15** illustrates a method, according to one or more embodiments. The method comprises: determining presence of one or more adapters electrically coupled to a host vehicle (at step 1503); recognizing at least one of a first entity and a second entity that are electrically coupled to the host vehicle through the one or more adapters (at step 1505); establishing a connection between the host vehicle, the first entity, and the second entity (at step 1507); communicating a command to one of the first entity and the second entity to function as an extension cord based on a first charge and a second charge received from the first entity and the second entity, respectively (at step 1509); and providing an optimal charge to one or more first battery packs of the host vehicle by providing at least one of the first charge and the second charge (at step 1511).

In one embodiment, the method further comprises: capturing one of one or more images and one or more videos of at least one of the host vehicle, the first entity, and the second entity and communicating a fifth sensory information. The method further comprises: recognizing an identity of at least one of the host vehicle, the first entity, and the second entity based on the fifth sensory information received from a sensor module. The method further comprises: analyzing the one or more images and the one or more videos of at least one of the host vehicle, the first entity, and the second entity, and recognizing an identity of at least one of the host vehicle, the first entity, and the second entity by performing image analysis.

In one embodiment, the method further comprises: determining a charging requirement of the host vehicle based on the fourth sensory information. The method further comprises: determining, through an artificial intelligence engine, at least one of an itinerary, an environmental condition, and a traffic condition of the host vehicle and communicating a fourth sensory information.

In one embodiment, the method further comprises: recognizing at least one of the first entity and the second entity that are electrically coupled to the host vehicle through the one or more adapters based on at least one of one or more images and one or more videos captured by a sensor module. The method further comprises: analyzing at least one of the one or more images and the one or more videos captured by the sensor module and extracting meaningful information through an artificial intelligence engine to recognize at least one of the first entity and the second entity.

In one embodiment, the method further comprises: receiving simultaneously the first charge and the second charge from the first entity and the second entity respectively through the one or more adapters. The method further comprises: consolidating the first charge and the second charge and providing the optimal charge based on at least one of a charging specification and a charging requirement of the host vehicle. In one embodiment, the method further comprises: disconnecting the first charge and providing the second charge as the optimal charger.

In one embodiment, the method further comprises: determining parameters related to at least one of a state-of-health (SoH), a state-of-charge (SoC), a host vehicle temperature, an environmental temperature and communicating the third sensory information. The method further comprises: determining a charging requirement of the host vehicle based on a third sensory information received from a sensor module.

In one embodiment, the method further comprises: determining a charging requirement of the host vehicle based on at least one of a third sensory information received from a sensor module and a fourth sensory information received from an artificial intelligence engine, wherein the fourth sensory information comprises one of an itinerary, an environmental condition, and a traffic condition of the host vehicle.

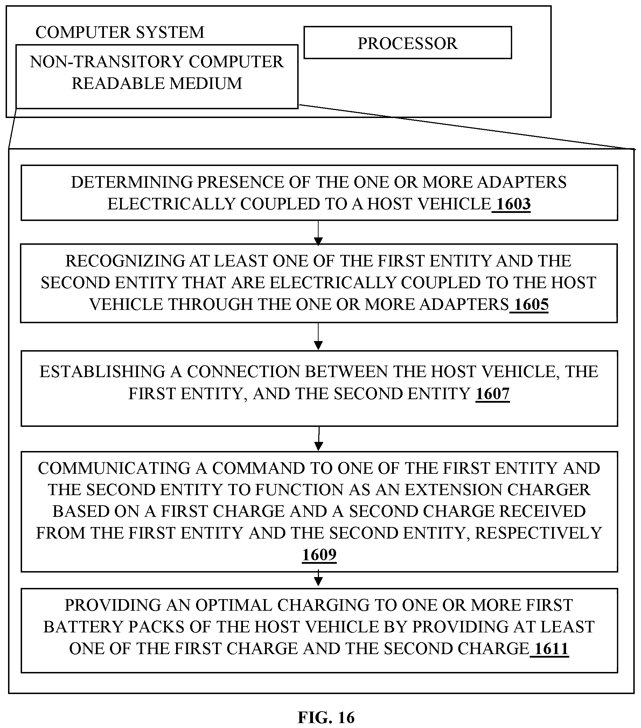

As an example, **FIG. 16** illustrates a non-transitory computer readable medium, according to one or more embodiments. The non-transitory computer readable medium storing a sequence of instructions, which when executed by a processor causes: determining presence of one or more adapters electrically coupled to a host vehicle (at step 1603); recognizing at least one of a first entity and a second entity that are electrically coupled to the host vehicle through the one or more adapters (at step 1605); establishing a connection between the host vehicle, the first entity, and the second entity (at step 1607); communicating a command to one of the first entity and the second entity to function as an extension cord based on a first charge and a second charge received from the first entity and the second entity, respectively (at step 1609); and providing an optimal charge to one or more first battery packs of the host vehicle by providing at least one of the first charge and the second charge (at step 1611).

In one embodiment, the non-transitory computer readable medium further executes: determining, through an artificial intelligence engine, at least one of an itinerary, an environmental condition, and a traffic condition of the host vehicle and communicates a fourth sensory information.

In one embodiment, the non-transitory computer readable medium further causes: determining a charging requirement of the host vehicle based on the fourth sensory information.

In one embodiment, the non-transitory computer readable medium further causes: recognizing at least one of the first entity and the second entity that are electrically coupled to the host vehicle through the one or more adapters based on at least one of one or more images and one or more videos captured by a sensor module.

In one embodiment, the non-transitory computer readable medium further causes: analyzing at least one of the one or more images and the one or more videos captured by a sensor module and extracts meaningful information through an artificial intelligence engine to recognize at least one of the first entity and the second entity.

In one embodiment, the non-transitory computer readable medium further causes: receiving simultaneously the first charge and the second charge from the first entity and the second entity respectively through the one or more adapters.

In one embodiment, the non-transitory computer readable medium further causes: consolidating the first charge and the second charge and providing as the optimal charge based on a charging specification of the host vehicle.

In one embodiment, the non-transitory computer readable medium further causes: bypassing the first charge and providing the second charge as the optimal charge.

In one embodiment, the non-transitory computer readable medium further causes: determining a charging requirement of the host vehicle based on a third sensory information received from a sensor module.

In one embodiment, the non-transitory computer readable medium further causes: determining parameters related to at least one of a state-of-health (SoH), a state-of-charge (SoC), a host vehicle temperature, an environmental temperature and communicating the third sensory information.

In one embodiment, the non-transitory computer readable medium further causes: determining a charging requirement of the host vehicle based on at least one of a third sensory information received from a sensor module and a fourth sensory information received from an artificial intelligence engine, wherein the fourth sensory information comprises one of an itinerary, an environmental condition, and a traffic condition of the host vehicle.

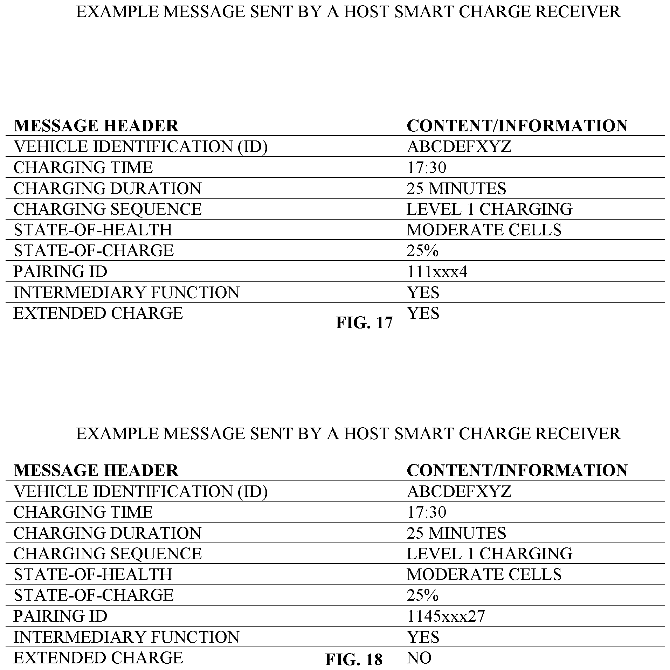

As an example, **FIG. 17** illustrates a message sent by a host smart charge receiver to a first entity, according to one or more embodiments. In an embodiment, the message is similar to HL7 protocol. The sample message shown in FIG. 17 comprises fields such as host vehicle ID, pairing ID, charging time, charging duration, charging sequence, state-of-charge (SoC), state-of-health, extended charge, Intermediary function. The first entity herein may be a vehicle.

The vehicle ID may be a serial identification number, or a tag associated with the electric vehicle configured to identify and locate the electric vehicle. The pairing ID may be the identification information communicated between two components for authentication and seamless transfer of information between the components. The charging time may be the scheduled time, allotted time, provided for optimally charging the host vehicle. The charging duration refers to the duration (i.e., time period) for charging the electric vehicle. The state-of-health refers to state-of-health information of different portions of the battery pack of the host vehicle. The state-of-charge refers to state-of-charge information of different portions of the battery pack of the host vehicle. The extended charge refers to providing charge by a first entity in addition to charge received from a second entity. The extended charge may also refer to providing only the second charge received from the second entity. The extended charge field may have attributes of "Yes" or "No". If "Yes", the host vehicle may receive charge from the first entity in addition to charge received from the second entity. If "No", the host vehicle may receive charge only from the first entity or the second entity. The first entity upon receiving the message decodes and extracts the information for charging the host vehicle. The first smart charge receiver within the first entity then may supply power according to the information received via the message to optimally charge the host vehicle. The intermediary function refers to assigning the entity as the intermediary entity which can function as an extension charger.

As an example, **FIG. 18** illustrates a message sent by a host smart charge receiver to a first entity, according to one or more embodiments. In an embodiment, the message is similar to HL7 protocol. The sample message shown in FIG. 18 comprises fields such as host vehicle ID, pairing ID, charging time, charging duration, charging sequence, state-of-charge (SoC), state-of-health, extended charge, Intermediary function. The first entity herein may be a charging station.

The vehicle ID may be a serial identification number, or a tag associated with the electric vehicle configured to identify and locate the electric vehicle. The pairing ID may be the identification information communicated between two components for authentication and seamless transfer of information between the components. The charging time may be the scheduled time, allotted time, provided for optimally charging the vehicle. The charging duration refers to the duration (i.e., time period) for charging the electric vehicle. The charging sequence refers to a charging pattern defined by the host smart charge receiver based on the battery parameters (e.g., state-of-charge, state-of-health) and charging time. The state-of-health refers to state-of-health information of different portions of the battery pack. The state-of-charge refers to state-of-charge information of different portions of the battery pack. The extended charge refers to providing charge by the first entity in addition to charge received from the second entity. The extended charge field may have attributes of "Yes" or "No". If "Yes", the host vehicle may receive charge from the first entity in addition to charge received from the second entity. If "No", the host vehicle may receive charge only from the first entity or the second entity. In one embodiment, the first entity may disconnect the first charge and connect only the second charge. The first entity upon receiving the message decodes and extracts the information for charging the vehicle. The first smart charge receiver within the first entity then may supply power according to the information received via the message to optimally charge the host vehicle.

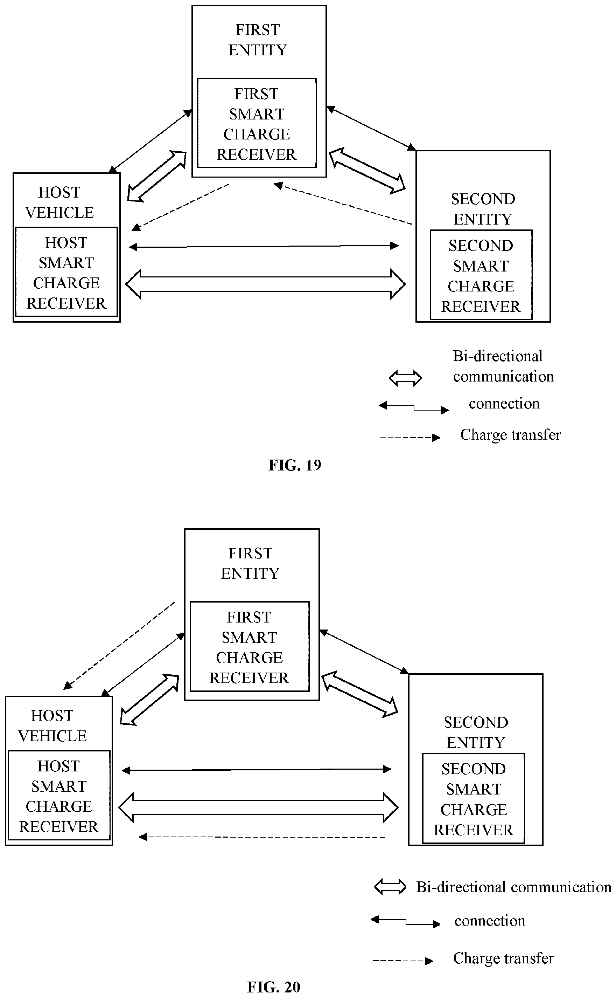

As an example, **FIG. 19** illustrates the first entity functioning as an extension charger, according to one or more embodiments. The host vehicle may be connected to the first entity and the second entity. The first entity may be the intermediary entity. The host vehicle comprises the host smart charge receiver. The first entity may comprise the first smart charge receiver. The second entity may comprise the second smart charge receiver. In this embodiment, the host smart charge receiver receives only the second charge from the second entity. The host smart charge receiver disconnects the first entity from supplying to the host vehicle. The first entity herein acts as an extension charger. In one embodiment, the host vehicle is connected to the second entity via the first entity.

As an example, **FIG. 20** illustrates the first entity functioning as an extension charger, according to one or more embodiments. The host vehicle may be connected to the first entity and the second entity. The first entity may be the intermediary entity. The host vehicle comprises the host smart charge receiver. The first entity may comprise the first smart charge receiver. The second entity may comprise the second smart charge receiver. In this embodiment, the host smart charge receiver receives both the first charge and the second charge to the host vehicle. In one embodiment, the host vehicle is connected to the second entity via the first entity.

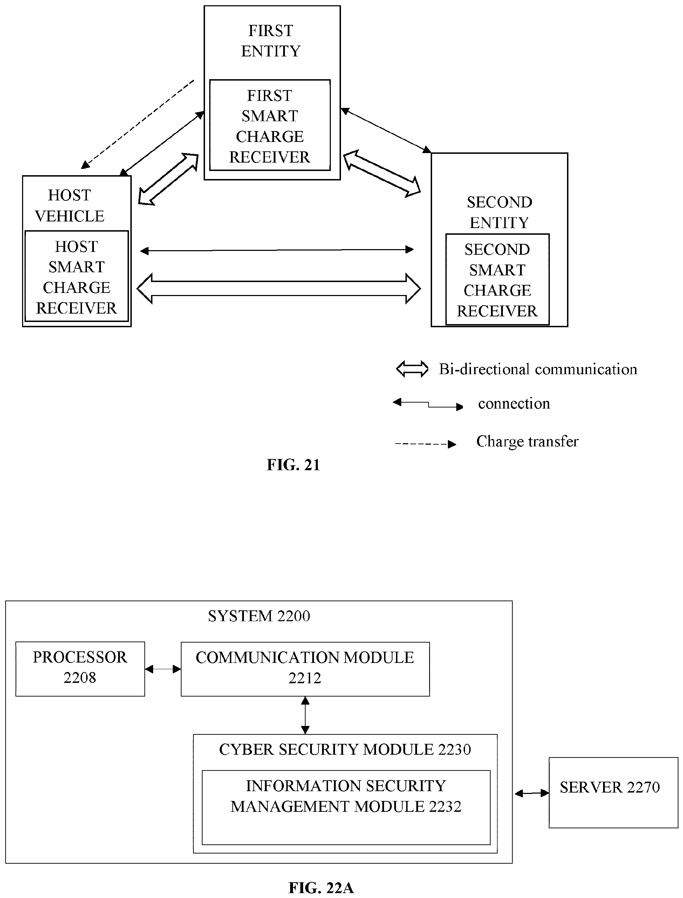

As an example, **FIG. 21** illustrates the first entity functioning as an extension charger, according to one or more embodiments. The host vehicle may be connected to the first entity and the second entity. The first entity may be the intermediary entity. The host vehicle comprises the host smart charge receiver. The first entity may comprise the first smart charge receiver. The second entity may comprise the second smart charge receiver. In this embodiment, the host smart charge receiver receives only the first charge from the first entity. The host smart charge receiver disconnects the second entity from supplying to the host vehicle. The first entity herein acts as an extension charger.

In an embodiment, the system further comprises a cyber security module wherein the cyber security module comprises an information security management module providing isolation between the communication module and servers.

In an embodiment, the information security management module is operable to, receive data from the communication module, exchange a security key at a start of the communication between the communication module and the server, receive the security key from the server, authenticate an identity of the server by verifying the security key, analyze the security key for a potential cyber security threat, negotiate an encryption key between the communication module and the server, encrypt the data; and transmit the encrypted data to the server when no cyber security threat is detected.

In an embodiment, the information security management module is operable to exchange a security key at a start of the communication between the communication module and the server, receive the security key from the server, authenticate an identity of the server by verifying the security key, analyze the security key for a potential cyber security threat, negotiate an encryption key between the system and the server, receive encrypted data from the server, decrypt the encrypted data, perform an integrity check of the decrypted data and transmit the decrypted data to the communication module when no cyber security threat is detected.

In an embodiment, the system may comprise a cyber security module.

In one aspect, a secure communication management (SCM) computer device for providing secure data connections is provided. The SCM computer device includes a processor in communication with memory. The processor is programmed to receive, from a first device, a first data message. The first data message is in a standardized data format. The processor is also programmed to analyze the first data message for potential cyber security threats. If the determination is that the first data message does not contain a cyber security threat, the processor is further programmed to convert the first data message into a first data format associated with the vehicle environment and transmit the converted first data message to the vehicle system using a first communication protocol associated with the vehicle system.

According to an embodiment, secure authentication for data transmissions comprises, provisioning a hardware-based security engine (HSE) located in communications system, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the communications system with other computing system subjects to said access control list, performing asynchronous validation and encryption of data using security engine including identifying a user device (UD) that incorporates credentials embodied in hardware using a hardware-based module provisioned with one or more security aspects for securing the system, wherein security aspects comprising said hardware-based module communicating with a user of said user device and said HSE.

In an embodiment, FIG. 22A shows the block diagram of the cyber security module. The communication of data between the system 2200 and the server 2270 through the communication module 2212 is first verified by the information security management module 2232 before being transmitted from the system to the server or from the server to the system. The information security management module is operable to analyze the data for potential cyber security threats, to encrypt the data when no cyber security threat is detected, and to transmit the data encrypted to the system or the server.

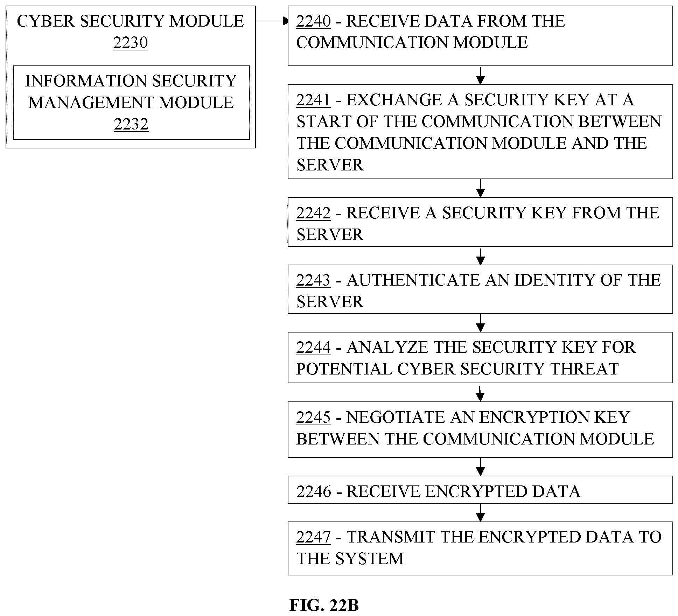

In an embodiment, the cyber security module further comprises an information security management module providing isolation between the system and the server. FIG. 22B shows the flowchart of securing the data through the cyber security module 2230. At step 2240, the information security management module is operable to receive data from the communication module. At step 2241, the information security management module exchanges a security key at a start of the communication between the communication module and the server. At step 2242, the information security management module receives a security key from the server. At step 2243, the information security management module authenticates an identity of the server by verifying the security key. At step 2244, the information security management module analyzes the security key for potential cyber security threats. At step 2245, the information security management module negotiates an encryption key between the communication module and the server. At step 2246, the information security management module receives the encrypted data. At step 2247, the information security management module transmits the encrypted data to the server when no cyber security threat is detected.

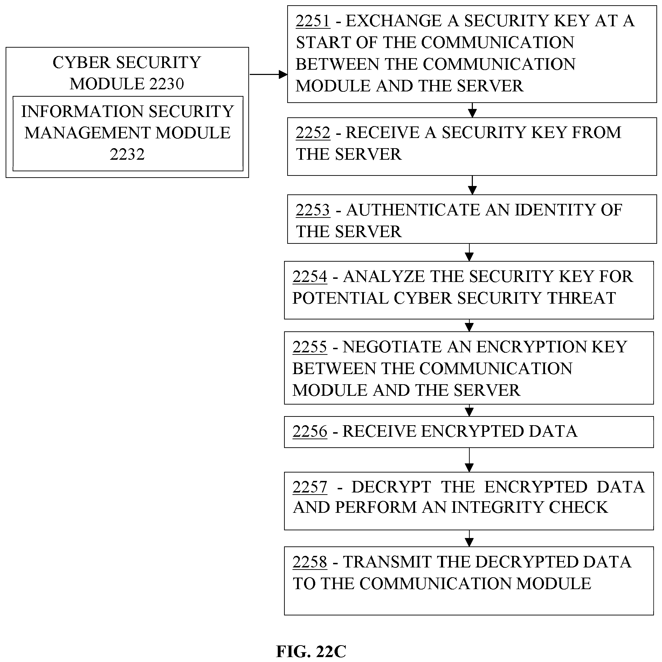

In an embodiment, FIG. 22C shows the flowchart of securing the data through the cyber security module 2230. At step 2251, the information security management module is operable to: exchange a security key at a start of the communication between the communication module and the server. At step 2252, the information security management module receives a security key from the server. At step 2253, the information security management module authenticates an identity of the server by verifying the security key. At step 2254, the information security management module analyzes the security key for potential cyber security threats. At step 2255, the information security management module negotiates an encryption key between the communication module and the server. At step 2256, the information security management module receives encrypted data. At step 2257, the information security management module decrypts the encrypted data, and performs an integrity check of the decrypted data. At step 2258, the information security management module transmits the decrypted data to the communication module when no cyber security threat is detected.

In an embodiment, the integrity check is a hash-signature verification using a Secure Hash Algorithm 256 (SHA256) or a similar method.

In an embodiment, the information security management module is configured to perform asynchronous authentication and validation of the communication between the communication module and the server.

In an embodiment, the information security management module is configured to raise an alarm if a cyber security threat is detected. In an embodiment, the information security management module is configured to discard the encrypted data received if the integrity check of the encrypted data fails.

In an embodiment, the information security management module is configured to check the integrity of the decrypted data by checking accuracy, consistency, and any possible data loss during the communication through the communication module.

In an embodiment, the server is physically isolated from the system through the information security management module. When the system communicates with the server as shown in FIG. 22A, identity authentication is first carried out on the system and the server. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carry out identity authentication on the information security management module. After the identity authentication is passed on to the information security management module, the two communication parties, the system, and the server, negotiate an encryption key and an integrity check key for data communication of the two communication parties through the authenticated asymmetric key. A session ID number is transmitted in the identity authentication process, so that the key needs to be bound with the session ID number; when the system sends data to the outside, the information security gateway receives the data through the communication module, performs integrity authentication on the data, then encrypts the data through a negotiated secret key, and finally transmits the data to the server through the communication module. When the information security management module receives data through the communication module, the data is decrypted first, integrity verification is carried out on the data after decryption, and if verification is passed, the data is sent out through the communication module; otherwise, the data is discarded.

In an embodiment, the identity authentication is realized by adopting an asymmetric key with a signature.

In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine.

In an embodiment, both communication parties need to authenticate their own identities through a pair of asymmetric keys, and a task in charge of communication with the information security management module of the system is identified by a unique pair of asymmetric keys.

In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key.

In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model.

The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and can ensure that the safety of the data on the server cannot be compromised by a hacker attack under the condition of the Internet by ensuring the safety and reliability of the communication between the system and the server.

In an embodiment of the system, the machine learning model is configured to learn using labelled data using a supervised learning method, wherein the supervised learning method comprises logic using at least one of a decision tree, a logistic regression, a support vector machine, a k-nearest neighbors, a Naive Bayes, a random forest, a linear regression, a polynomial regression, and a support vector machine for regression.

In an embodiment of the system, the machine learning model is configured to learn from the real-time data using an unsupervised learning method, wherein the unsupervised learning method comprises logic using at least one of a k-means clustering, a hierarchical clustering, a hidden Markov model, and an apriori algorithm.

In an embodiment of the system, the machine learning model has a feedback loop, wherein the output from a precious step is fed back to the model in real-time to improve the performance and accuracy of the output of a next step.

In an embodiment of the system, the machine learning model comprises a recurrent neural network model.

In an embodiment of the system, the machine learning model has a feedback loop, wherein the learning is further reinforced with a reward for each true positive of the output of the system.

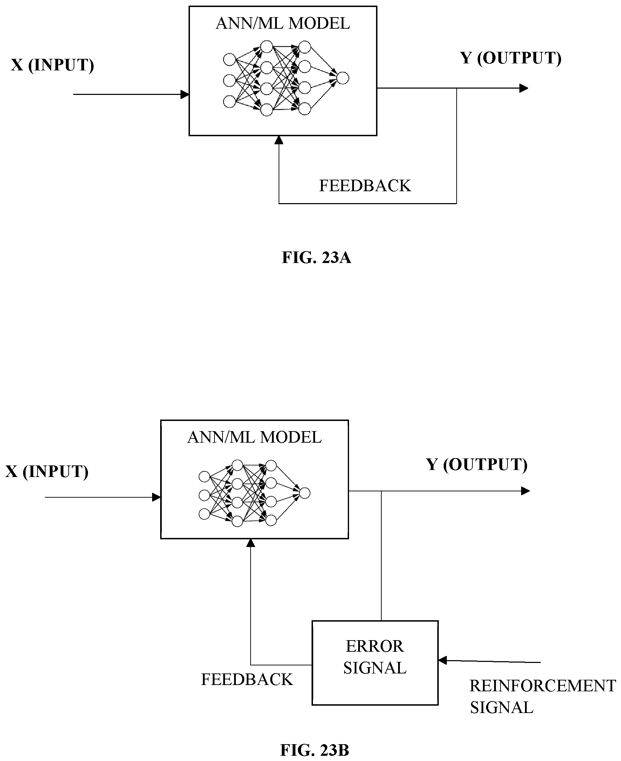

FIG. 23A shows a structure of the neural network / machine learning model with a feedback loop. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data, make a prediction on that input data, and then provide a response. The model may learn from the data. Learning can be supervised learning and/or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict or detect a charging requirement and the charging entity for charging the host vehicle based on the input data.

In an embodiment, ANNs may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, and image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes.

The neural network is featured with the feedback loop to adjust the system output dynamically as it learns from the new data. In machine learning, backpropagation and feedback loops are used to train an AI model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/MI, model is trained well, with large sets of labelled data and concepts, after a while, the models' performance may decline while adding new, unlabelled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabelled data is assimilated. A feedback loop refers to the process by which an AI model's predicted output is reused to train new versions of the model.

Initially, when the AI/ML model is trained, a few labelled samples comprising both positive and negative examples of the concepts (for e.g., charging requirement) are used that are meant for the model to learn. Afterward, the model is tested using unlabelled data. By using, for example, deep learning and neural networks, the model can then make predictions on whether the desired concept/s (for e.g., charging requirement and the entity for charging) are in unlabelled images. Each image is given a probability score where higher scores represent a higher level of confidence in the models' predictions. Where a model gives an image a high probability score, it is auto labelled with the predicted concept. However, in the cases where the model returns a low probability score, this input may be sent to a controller (may be a human moderator) which verifies and, as necessary, corrects the result. The human moderator may be used only in exception cases. The feedback loop feeds labelled data, auto-labelled or controller-verified, back to the model dynamically and is used as training data so that the system can improve its predictions in real-time and dynamically.

FIG. 23B shows a structure of the neural network / machine learning model with reinforcement learning. The network receives feedback from authorized networked environments. Though the system is similar to supervised learning, the feedback obtained in this case is evaluative not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

**Claims**

1. A system, comprising:

one or more adapters;
a first entity;
a second entity; and
a host smart charge receiver that comprises:

a processor storing instructions in non-transitory memory that, when executed, causes the processor to:

determine presence of the one or more adapters electrically coupled to a host vehicle;
recognize at least one of the first entity and the second entity that are electrically coupled to the host vehicle through the one or more adapters;
establish a connection between the host vehicle, the first entity, and the second entity;
analyze at least one of a first charge and a second charge received from the first entity and the second entity, respectively;
select at least one of the first entity and the second entity for charging one or more first battery packs of the host vehicle based on at least one of a charging specification of the host vehicle, a charging requirement, and a cost of charging; and provide an optimal charge to the one or more first battery packs of the host vehicle.

2. The system of claim 1, wherein the first entity and the second entity are similar entities; or wherein the first entity and the second entity are dissimilar entities.

3. The system of claim 1 or 2, wherein the one or more adapters are extended by electrically coupling one or more subsequent adapters to receive input power from a subsequent entity.

4. The system of any one of the previous claims, wherein the one or more adapters are operable to receive input power simultaneously from the first entity and the second entity.

5. The system of claim 4, wherein the one or more adapters provide the input power received from the first entity and the second entity to the host smart charge receiver.

6. The system of claim 5, wherein the host smart charge receiver comprises an artificial intelligence engine.

7. The system of claim 6, wherein the artificial intelligence engine determines at least one of an itinerary, an environmental condition, and a traffic condition of the host vehicle and communicates a fourth sensory information.

8. The system of claim 7, wherein the processor is operable to determine the charging requirement of the host vehicle based on at least one of the itinerary, the environmental condition, and the traffic condition of the host vehicle in response to the fourth sensory information.

9. The system of claim 8, wherein the system further comprises a sensor module.

10. The system of claim 9, wherein the processor recognizes at least one of the first entity and the second entity that are electrically coupled to the host vehicle through the one or more adapters based on one or more voltages measured by the sensor module.

11. The system of any one of the previous claims, wherein the connection between the host vehicle, the first entity, and the second entity is a daisy chain connection; and/or wherein the connection is one of a wired connection and a wireless connection.

12. A method comprising:

determining presence of one or more adapters electrically coupled to a host vehicle; recognizing at least one of a first entity and a second entity that are electrically coupled to the host vehicle through the one or more adapters; establishing a connection between the host vehicle, the first entity, and the second entity; analyzing at least one of a first charge and a second charge received from the first entity and the second entity, respectively; selecting at least one of the first entity and the second entity for charging one or more first battery packs of the host vehicle based on at least one of a charging specification of the host vehicle, a charging requirement, and a cost of charging; and providing an optimal charge to the one or more first battery packs of the host vehicle.

13. The method of claim 12, further comprising:

automatically providing the optimal charge to the one or more first battery packs of the host vehicle based on at least one of the charging specification of the host vehicle, the charging requirement, and the cost of charging; or receiving a user input and providing the optimal charge to the one or more first battery packs of the host vehicle based on the user input.

14. A non-transitory computer readable medium storing a sequence of instructions, which when executed by a processor causes:

determining presence of one or more adapters electrically coupled to a host vehicle; recognizing at least one of a first entity and a second entity that are electrically coupled to the host vehicle through the one or more adapters; establishing a connection between the host vehicle, the first entity, and the second entity; analyzing at least one of a first charge and a second charge received from the first entity and the second entity, respectively; selecting at least one of the first entity and the second entity for charging one or more first battery packs of the host vehicle based on at least one of a charging specification of the host vehicle, a charging requirement, and a cost of charging; and providing an optimal charge to the one or more first battery packs of the host vehicle.

15. The non-transitory computer readable medium of claim 14, further causes:

**EP 4 585 451 A1**

simultaneously receiving the first charge and the second charge from the first entity, and the second entity respectively through the one or more adapters;

consolidating the first charge and the second charge and providing the optimal charge based on the charging specification of the host vehicle; or

selecting one of the first charge and the second charge and providing the optimal charge based on at least one of the charging specification of the host vehicle and the cost of charging.

SYSTEM

HOST SMART CHARGE RECEVER **108**

PROCESSOR **110**

ADAPTOR **102**

FIRST ENTITY **104**

SECOND ENTITY **106**

DETERMINE PRESENCE OF THE ONE OR MORE ADAPTERS ELECTRICALLY COUPLED TO A HOST VEHICLE **103**

RECOGNIZE AT LEAST ONE OF THE FIRST ENTITY AND THE SECOND ENTITY THAT ARE ELECTRICALLY COUPLED TO THE HOST VEHICLE THROUGH THE ONE OR MORE ADAPTERS **105**

ESTABLISH A CONNECTION BETWEEN THE HOST VEHICLE, THE FIRST ENTITY, AND THE SECOND ENTITY **107**

ANALYZE AT LEAST ONE OF A FIRST CHARGE AND A SECOND CHARGE RECEIVED FROM THE FIRST ENTITY AND THE SECOND ENTITY, RESPECTIVELY **109**

SELECT AT LEAST ONE OF THE FIRST ENTITY AND THE SECOND ENTITY FOR CHARGING ONE OR MORE FIRST BATTERY PACKS OF THE HOST VEHICLE BASED ON AT LEAST ONE OF A CHARGING SPECIFICATION OF THE HOST VEHICLE, A CHARGING REQUIREMENT, AND A COST OF CHARGING **111**

PROVIDE AN OPTIMAL CHARGING TO THE ONE OR MORE FIRST BATTERY PACKS OF THE HOST VEHICLE **113**

**FIG. 1**

DETERMINING PRESENCE OF THE ONE OR MORE ADAPTERS ELECTRICALLY COUPLED TO A HOST VEHICLE 203

↓

RECOGNIZING AT LEAST ONE OF THE FIRST ENTITY AND THE SECOND ENTITY THAT ARE ELECTRICALLY COUPLED TO THE HOST VEHICLE THROUGH THE ONE OR MORE ADAPTERS 205

↓

ESTABLISHING A CONNECTION BETWEEN THE HOST VEHICLE, THE FIRST ENTITY, AND THE SECOND ENTITY 207

↓

ANALYZING AT LEAST ONE OF A FIRST CHARGE AND A SECOND CHARGE RECEIVED FROM THE FIRST ENTITY AND THE SECOND ENTITY, RESPECTIVELY 209

↓

SELECTING AT LEAST ONE OF THE FIRST ENTITY AND THE SECOND ENTITY FOR CHARGING ONE OR MORE FIRST BATTERY PACKS OF THE HOST VEHICLE BASED ON AT LEAST ONE OF A CHARGING SPECIFICATION OF THE HOST VEHICLE, A CHARGING REQUIREMENT, AND A COST OF CHARGING 211

↓

PROVIDING AN OPTIMAL CHARGING TO THE ONE OR MORE FIRST BATTERY PACKS OF THE HOST VEHICLE 213

FIG. 2

COMPUTER SYSTEM

PROCESSOR

NON-TRANSITORY COMPUTER READABLE MEDIUM

DETERMINING PRESENCE OF THE ONE OR MORE ADAPTERS ELECTRICALLY COUPLED TO A HOST VEHICLE 303

RECOGNIZING AT LEAST ONE OF THE FIRST ENTITY AND THE SECOND ENTITY THAT ARE ELECTRICALLY COUPLED TO THE HOST VEHICLE THROUGH THE ONE OR MORE ADAPTERS 305

ESTABLISHING A CONNECTION BETWEEN THE HOST VEHICLE, THE FIRST ENTITY, AND THE SECOND ENTITY 307

ANALYZING AT LEAST ONE OF A FIRST CHARGE AND A SECOND CHARGE RECEIVED FROM THE FIRST ENTITY AND THE SECOND ENTITY, RESPECTIVELY 309

SELECTING AT LEAST ONE OF THE FIRST ENTITY AND THE SECOND ENTITY FOR CHARGING ONE OR MORE FIRST BATTERY PACKS OF THE HOST VEHICLE BASED ON AT LEAST ONE OF A CHARGING SPECIFICATION OF THE HOST VEHICLE, A CHARGING REQUIREMENT, AND A COST OF CHARGING 311

PROVIDING AN OPTIMAL CHARGING TO THE ONE OR MORE FIRST BATTERY PACKS OF THE HOST VEHICLE 313

**FIG. 3**

FIG. 4

Bi-directional
communication
connection

FIG. 5

**FIG. 6**

**FIG. 7**

EXAMPLE MESSAGE SENT BY A HOST SMART CHARGE RECEIVER

| MESSAGE HEADER | CONTENT/INFORMATION |
|---|---|
| VEHICLE IDENTIFICATION (ID) | ABCDEFXYZ |
| CHARGING TIME | 16:00 |
| CHARGING DURATION | 15 MINUTES |
| STATE-OF-HEALTH | HEALTHY CELLS |
| STATE-OF-CHARGE | 30% |
| PAIRING ID | 111xxx2 |
| CHARGING SEQUENCE | LEVEL 1 CHARGING |
| EXTENDED CHARGE | YES |

**FIG. 8**

EXAMPLE MESSAGE SENT BY A HOST SMART CHARGE RECEIVER

| MESSAGE HEADER | CONTENT/INFORMATION |
|---|---|
| VEHICLE IDENTIFICATION (ID) | ABCDEFXYZ |
| CHARGING TIME | 17:00 |
| CHARGING DURATION | 20 MINUTES |
| STATE-OF-HEALTH | MODERATE CELLS |
| STATE-OF-CHARGE | 40% |
| PAIRING ID | 111xxx3 |
| CHARGING SEQUENCE | LEVEL 2 CHARGING |
| EXTENDED CHARGE | NO |

**FIG. 9**

**FIG. 10**

HOST VEHICLE      FIRST ENTITY      SECOND ENTITY

**FIG. 11**

FIRST ENTITY      HOST VEHICLE      SECOND ENTITY

**FIG. 12**

FIRST ENTITY        HOST VEHICLE        SECOND ENTITY

**FIG. 13**

SYSTEM

HOST SMART CHARGE
RECEVER **1408**

PROCESSOR **1410**

ADAPTER **1402**

FIRST ENTITY **1404**

SECOND ENTITY **1406**

DETERMINE PRESENCE OF THE ONE OR MORE ADAPTERS
ELECTRICALLY COUPLED TO A HOST VEHICLE **1403**

RECOGNIZE AT LEAST ONE OF THE FIRST ENTITY AND THE SECOND
ENTITY THAT ARE ELECTRICALLY COUPLED TO THE HOST VEHICLE
THROUGH THE ONE OR MORE ADAPTERS **1405**

ESTABLISH A CONNECTION BETWEEN THE HOST VEHICLE, THE
FIRST ENTITY, AND THE SECOND ENTITY **1407**

COMMUNICATE A COMMAND TO ONE OF THE FIRST ENTITY AND
THE SECOND ENTITY TO FUNCTION AS AN EXTENSION CHARGER
BASED ON A FIRST CHARGE AND A SECOND CHARGE RECEIVED
FROM THE FIRST ENTITY AND THE SECOND ENTITY, RESPECTIVELY
**1409**

PROVIDE AN OPTIMAL CHARGING TO ONE OR MORE FIRST BATTERY
PACKS OF THE HOST VEHICLE BY PROVIDING AT LEAST ONE OF THE
FIRST CHARGE AND THE SECOND CHARGE **1411**

**FIG. 14**

DETERMINING PRESENCE OF THE ONE OR MORE ADAPTERS ELECTRICALLY COUPLED TO A HOST VEHICLE **1503**

↓

RECOGNIZING AT LEAST ONE OF THE FIRST ENTITY AND THE SECOND ENTITY THAT ARE ELECTRICALLY COUPLED TO THE HOST VEHICLE THROUGH THE ONE OR MORE ADAPTERS **1505**

↓

ESTABLISHING A CONNECTION BETWEEN THE HOST VEHICLE, THE FIRST ENTITY, AND THE SECOND ENTITY **1507**

↓

COMMUNICATING A COMMAND TO ONE OF THE FIRST ENTITY AND THE SECOND ENTITY TO FUNCTION AS AN EXTENSION CHARGER BASED ON A FIRST CHARGE AND A SECOND CHARGE RECEIVED FROM THE FIRST ENTITY AND THE SECOND ENTITY, RESPECTIVELY **1509**

↓

PROVIDING AN OPTIMAL CHARGING TO ONE OR MORE FIRST BATTERY PACKS OF THE HOST VEHICLE BY PROVIDING AT LEAST ONE OF THE FIRST CHARGE AND THE SECOND CHARGE **1511**

**FIG. 15**

COMPUTER SYSTEM

PROCESSOR

NON-TRANSITORY COMPUTER READABLE MEDIUM

DETERMINING PRESENCE OF THE ONE OR MORE ADAPTERS ELECTRICALLY COUPLED TO A HOST VEHICLE **1603**

RECOGNIZING AT LEAST ONE OF THE FIRST ENTITY AND THE SECOND ENTITY THAT ARE ELECTRICALLY COUPLED TO THE HOST VEHICLE THROUGH THE ONE OR MORE ADAPTERS **1605**

ESTABLISHING A CONNECTION BETWEEN THE HOST VEHICLE, THE FIRST ENTITY, AND THE SECOND ENTITY **1607**

COMMUNICATING A COMMAND TO ONE OF THE FIRST ENTITY AND THE SECOND ENTITY TO FUNCTION AS AN EXTENSION CHARGER BASED ON A FIRST CHARGE AND A SECOND CHARGE RECEIVED FROM THE FIRST ENTITY AND THE SECOND ENTITY, RESPECTIVELY **1609**

PROVIDING AN OPTIMAL CHARGING TO ONE OR MORE FIRST BATTERY PACKS OF THE HOST VEHICLE BY PROVIDING AT LEAST ONE OF THE FIRST CHARGE AND THE SECOND CHARGE **1611**

**FIG. 16**

EXAMPLE MESSAGE SENT BY A HOST SMART CHARGE RECEIVER

| MESSAGE HEADER | CONTENT/INFORMATION |
| --- | --- |
| VEHICLE IDENTIFICATION (ID) | ABCDEFXYZ |
| CHARGING TIME | 17:30 |
| CHARGING DURATION | 25 MINUTES |
| CHARGING SEQUENCE | LEVEL 1 CHARGING |
| STATE-OF-HEALTH | MODERATE CELLS |
| STATE-OF-CHARGE | 25% |
| PAIRING ID | 111xxx4 |
| INTERMEDIARY FUNCTION | YES |
| EXTENDED CHARGE | YES |

**FIG. 17**

EXAMPLE MESSAGE SENT BY A HOST SMART CHARGE RECEIVER

| MESSAGE HEADER | CONTENT/INFORMATION |
| --- | --- |
| VEHICLE IDENTIFICATION (ID) | ABCDEFXYZ |
| CHARGING TIME | 17:30 |
| CHARGING DURATION | 25 MINUTES |
| CHARGING SEQUENCE | LEVEL 1 CHARGING |
| STATE-OF-HEALTH | MODERATE CELLS |
| STATE-OF-CHARGE | 25% |
| PAIRING ID | 1145xxx27 |
| INTERMEDIARY FUNCTION | YES |
| EXTENDED CHARGE | NO |

**FIG. 18**

FIG. 19

FIG. 20

**FIG. 21**

Bi-directional communication

connection

Charge transfer

**FIG. 22A**

| CYBER SECURITY MODULE 2230 | → | 2240 - RECEIVE DATA FROM THE COMMUNICATION MODULE |
| INFORMATION SECURITY MANAGEMENT MODULE 2232 | | |

2241 - EXCHANGE A SECURITY KEY AT A START OF THE COMMUNICATION BETWEEN THE COMMUNICATION MODULE AND THE SERVER

2242 - RECEIVE A SECURITY KEY FROM THE SERVER

2243 - AUTHENTICATE AN IDENTITY OF THE SERVER

2244 - ANALYZE THE SECURITY KEY FOR POTENTIAL CYBER SECURITY THREAT

2245 - NEGOTIATE AN ENCRYPTION KEY BETWEEN THE COMMUNICATION MODULE

2246 - RECEIVE ENCRYPTED DATA

2247 - TRANSMIT THE ENCRYPTED DATA TO THE SYSTEM

**FIG. 22B**

CYBER SECURITY
MODULE 2230

INFORMATION SECURITY
MANAGEMENT MODULE
2232

2251 - EXCHANGE A SECURITY KEY AT A START OF THE COMMUNICATION BETWEEN THE COMMUNICATION MODULE AND THE SERVER

↓

2252 - RECEIVE A SECURITY KEY FROM THE SERVER

↓

2253 - AUTHENTICATE AN IDENTITY OF THE SERVER

↓

2254 - ANALYZE THE SECURITY KEY FOR POTENTIAL CYBER SECURITY THREAT

↓

2255 - NEGOTIATE AN ENCRYPTION KEY BETWEEN THE COMMUNICATION MODULE AND THE SERVER

↓

2256 - RECEIVE ENCRYPTED DATA

↓

2257 - DECRYPT THE ENCRYPTED DATA AND PERFORM AN INTEGRITY CHECK

↓

2258 - TRANSMIT THE DECRYPTED DATA TO THE COMMUNICATION MODULE

**FIG. 22C**

ANN/ML MODEL

X (INPUT)

Y (OUTPUT)

FEEDBACK

**FIG. 23A**

ANN/ML MODEL

X (INPUT)

Y (OUTPUT)

ERROR
SIGNAL

FEEDBACK

REINFORCEMENT
SIGNAL

**FIG. 23B**

# EP 4 585 451 A1

Europäisches
Patentamt

European
Patent Office

Office européen
des brevets

## EUROPEAN SEARCH REPORT

**Application Number**

EP 25 15 1001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/050193 A1 (HUAWEI TECH CO LTD [CN]) 6 April 2023 (2023-04-06) | 1,2,4, 11-15 | INV. B60L53/64 |
| Y | * paragraph [0038] - paragraph [0038] * * paragraph [0067] - paragraph [0075]; figure 1 * * paragraph [0083] - paragraph [0142]; figures 3,4 * & EP 4 395 105 A1 (HUAWEI TECH CO LTD [CN]) 3 July 2024 (2024-07-03) * paragraph [0037] - paragraph [0038] * * paragraph [0058] - paragraph [0066]; figure 1 * * paragraph [0074] - paragraph [0129]; figures 3,4 * | 3,5-10 | B60L53/62 B60L53/14 B60L53/66 B60L53/67 |
| Y | US 2022/024330 A1 (BOOKS MARTIN T [US]) 27 January 2022 (2022-01-27) | 5-10 | |
| A | * paragraph [0045] - paragraph [0054] * | 1-4, 11-15 | |
| A | US 2023/356614 A1 (LU NORMAN [US] ET AL) 9 November 2023 (2023-11-09) * paragraph [0094]; figure 2F * | 1-15 | TECHNICAL FIELDS SEARCHED (IPC) B60L |
| Y | KR 2023 0083958 A (EVAR [KR]) 12 June 2023 (2023-06-12) | 3 | |
| A | * paragraph [0078] - paragraph [0086]; figure 6 * | 1,2 | |

The present search report has been drawn up for all claims

| Place of search | Date of completion of the search | Examiner |
|---|---|---|
| The Hague | 22 May 2025 | Utz, Tilman |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 25 15 1001

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | | Publication date |
|---|---|---|---|---|
| WO 2023050193 A1 | 06-04-2023 | CN | 118044089 A | 14-05-2024 |
| | | EP | 4395105 A1 | 03-07-2024 |
| | | US | 2024239229 A1 | 18-07-2024 |
| | | WO | 2023050193 A1 | 06-04-2023 |
| US 2022024330 A1 | 27-01-2022 | CN | 113165536 A | 23-07-2021 |
| | | EP | 3860876 A1 | 11-08-2021 |
| | | US | 2022024330 A1 | 27-01-2022 |
| | | WO | 2020150155 A1 | 23-07-2020 |
| US 2023356614 A1 | 09-11-2023 | NONE | | |
| KR 20230083958 A | 12-06-2023 | EP | 4442493 A1 | 09-10-2024 |
| | | JP | 2024544672 A | 03-12-2024 |
| | | KR | 102451471 B1 | 07-10-2022 |
| | | KR | 20230083958 A | 12-06-2023 |
| | | US | 2025026233 A1 | 23-01-2025 |
| | | WO | 2023101312 A1 | 08-06-2023 |

EPO FORM P0459

For more details about this annex : see Official Journal of the European Patent Office, No. 12/82